(19) Europäisches Patentamt
European Patent Office
Office européen des brevets

(11) **EP 4 329 216 A1**

(12) **EUROPEAN PATENT APPLICATION**

(43) Date of publication:
**28.02.2024 Bulletin 2024/09**

(21) Application number: **23190613.2**

(22) Date of filing: **09.08.2023**

(51) International Patent Classification (IPC):
**H04B 7/155** (2006.01)

(52) Cooperative Patent Classification (CPC):
**H04B 7/15592; H04B 7/15528**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.08.2022 JP 2022127979
28.09.2022 JP 2022155391**

(71) Applicant: **TOYOTA JIDOSHA KABUSHIKI
KAISHA**
**Toyota-shi, Aichi-ken, 471 8571 (JP)**

(72) Inventor: **TAKIZAWA, Kenichi**
**TOKYO 184-8795 (JP)**

(74) Representative: **Cabinet Beau de Loménie
158, rue de l'Université
75340 Paris Cedex 07 (FR)**

(54) **COMMUNICATION SYSTEM, METHOD, RELAY STATION, AND CONTROL DEVICE**

(57)     A communication system (100A) includes a transmission station (2), a reception station (4), one or more relay stations (3) configured to relay a first signal from the transmission station (2) to the reception station (4) without demodulating or decoding the first signal, and a controller (11, 32). The controller (11, 32) is configured to acquire a first delay time and a first phase rotation amount to be provided to the first signal in relay by a first relay station (3) so that one or more relay signals of the first signal arrive at the reception station (4) at the same time and in the same phase after a first time length from a head of a slot in a radio frame and to cause the first relay station (3) to provide the first delay time and the first phase rotation amount to the first signal.

FIG. 1

EP 4 329 216 A1

**Description**

BACKGROUND

Technical Field

The present disclosure relates to a communication system, a method, a relay station, and a control device.

Description of the Related Art

In radio communication such as 5th generation mobile communication system (5G), ultra low latency communication of a sub-millisecond or less is expected. In addition, in terms of improvement in communication service, expansion of a coverage area of a cell is desired, and to achieve this, relay communication by way of a relay station is effective. Thus, a radio communication method using a terminal station that performs radio communication as a relay station has been proposed. Further, as a relay technique with low latency, non-regenerative relay in which demodulation or decoding is not performed at a relay station is desirable.

Citation List

Non-Patent Documents

Non-Patent Document 1: H. Chen. A. B. Gershman, and S. Shahbazpanahi, "Filter-and-Forward Distributed Beamforming in Relay Networks with Frequency Selective Fading," IEEE Trans. On Signal Processing, vol. 58, no. 3, March 2010.
Non-Patent Document 2: Noguchi, Hayashi, Kaneko, Sakai, "A Single Frequency Full-Duplex Radio Relay Station for Frequency Domain Equalization Systems", Technical Report of The Institute of Electronics, Information and Communication Engineers, vol. SIP2011-109, January 2012.

SUMMARY

One aspect of the present disclosure is to provide a communication system, a method, a relay station and, a control device that enable improvement in a signal-to-noise ratio (SNR) at a reception side in radio communication in which non-regenerative relay is performed.

An aspect of the present disclosure is a communication system including:

a transmission station;
a reception station;
one or more relay stations configured to relay a first signal from the transmission station to the reception station without demodulating or decoding the first signal; and
a controller configured to acquire, for at least a first relay station among the one or more relay stations, a first delay time and a first phase rotation amount to be provided to the first signal in relay by the first relay station on a basis of radio propagation characteristics between the transmission station and the first relay station and radio propagation characteristics between the reception station and the first relay station so that one or more relay signals of the first signal relayed by the one or more relay stations arrive at the reception station at the same time and in the same phase after a first time length from a head of a slot in a radio frame which is synchronous among the transmission station, the reception station, and the one or more relay stations and in which the first signal is transmitted, and to cause the first relay station to provide the first delay time and the first phase rotation amount to the first signal.

Another aspect of the present disclosure is a method executed by a computer, including:

acquiring, for at least a first relay station among one or more relay stations that relay a first signal from a transmission station to a reception station without demodulating or decoding the first signal, a first delay time and a first phase rotation amount to be provided to the first signal in relay by the first relay station on a basis of radio propagation characteristics between the transmission station and the first relay station and radio propagation characteristics between the reception station and the first relay station so that one or more relay signals of the first signal relayed by the one or more relay stations arrive at the reception station at the same time and in the same phase after a first time length from a head of a slot in a radio frame which is synchronous among the transmission station, the reception station, and the one or more relay stations and in which the first signal is transmitted; and
causing the first relay station to provide the first delay time and the first phase rotation amount to the first signal.

Another aspect of the present disclosure is a relay station including:

a controller configured to

acquire, in non-regenerative relay of relaying a first signal from a transmission station to a reception station without demodulating or decoding the first signal, a first delay time on a basis of radio propagation characteristics between the relay station and the reception station so that a relay signal of a first signal arrives at the reception station after a first time length from a head of a slot in a radio frame which is synchronous among the transmission station, the reception station, and one or more relay stations and in which the first signal is transmitted, and acquire a first phase rotation amount that cancels a phase rotation amount to be applied to the first signal by the relay; and

a radio processing unit configured to provide the first delay time and the first phase rotation amount to the first signal in the non-regenerative relay of the first signal.

An aspect of the present disclosure is a control device including:
a controller configured to acquire a first time length on a basis of radio propagation characteristics between a transmission station and a reception station and respective radio propagation characteristics between one or more relay stations and the reception station, the one or more relay stations being configured to relay a first signal from the transmission station to the reception station without demodulating or decoding the first signal, the one or more relay stations providing a first delay time and a first phase rotation amount to the first signal so that relay signals of the first signal arrive at the reception station at the same time and in the same phase after the first time length from a head of a slot in a radio frame which is synchronous among the transmission station, the reception station, and the one or more relay stations and in which the first signal is transmitted.

According to one aspect of the present disclosure, it is possible to improve a signal-to-noise ratio (SNR) at a reception side in radio communication in which non-regenerative relay is performed.

BRIEF DESCRIPTION OF THE DRAWINGS

Fig. 1 is a diagram illustrating an example of a system configuration of a communication system 100A according to a first embodiment;
Fig. 2 is a diagram illustrating an example of a system configuration of a communication system;
Fig. 3 is a diagram illustrating an example of a hardware configuration of the relay station;
Fig. 4 is a diagram illustrating an example of a configuration of the FIR filter according to the first embodiment;
Fig. 5 is a diagram illustrating a hardware configuration of the control device;
Fig. 6 is a diagram illustrating an example of transmission timings and arrival timings of a directly delivered signal from the base station 2 and a relay signal from the relay station;
Fig. 7 is an example of a flowchart of the processing of the control device;
Fig. 8 is an example of a flowchart of processing of the base station;
Fig. 9A is an example of a flowchart of the processing at the relay station;
Fig. 9B is an example of a flowchart of the processing at the relay station;
Fig. 10A is an example of sequences of processing related to non-regenerative relay according to the first embodiment;
Fig. 10B is an example of sequences of processing related to non-regenerative relay according to the first embodiment;
Fig. 11A is an example of a flowchart of the processing of the control device 1B according to the second embodiment;
Fig. 11B is an example of a flowchart of the processing of the control device 1B according to the second embodiment;
Fig. 12A is an example of sequences of processing related to non-regenerative relay according to the second embodiment;
Fig. 12B is an example of sequences of processing related to non-regenerative relay according to the second embodiment;
Fig. 13A is an example of sequences of processing in case where the base station executes the determination of whether or not the relay station executes non-regenerative relaying, and the calculation of the delay time and the phase rotation amount provided to the relay signal in the relay station; and

Fig. 13B is an example of sequences of processing in case where the base station executes the determination of whether or not the relay station executes non-regenerative relaying, and the calculation of the delay time and the phase rotation amount provided to the relay signal in the relay station.

DESCRIPTION OF THE EMBODIMENTS

In non-regenerative relay, different phase rotation amounts and different delay times are respectively provided to a plurality of relay signals relayed by a plurality of relay stations on a radio propagation path. These plurality of relay signals are received at different timings and in different phases at a reception station, and thus, there is a case where a sufficient SNR is not obtained when the signals are synthesized, due to, for example, amplitudes being cancelled out among the plurality of relay signals. In view of this, one aspect of the present disclosure is directed to improving an SNR obtained when non-regenerative relay is performed at the relay station.

One aspect of the present disclosure is a communication system including a transmission station, a reception station, one or more relay stations, and a controller. For example, the transmission station may be a base station, and the reception station may be a terminal station. However, the configuration is not limited to this, and the transmission station may be a terminal station, and the reception station may be a base station. The relay station may be, for example, a small base station, a mobile base station, a smartphone, in-vehicle equipment, or the like. A slot timing of a radio frame may be synchronous among the transmission station, the reception station and the one or more relay stations. The one or more relay stations may perform non-regenerative relay of relaying signals without demodulating or decoding the signals.

The controller may be, for example, a computer, a processor such as a central processing unit (CPU), or an arithmetic circuit such as a field programmable gate array (FPGA). The controller may be provided in, for example, a relay station, a base station, or a terminal station, or may be provided in a control device which is connected to a base station and which manages a radio line. The controller may acquire, for at least a first relay station, a first delay time and a first phase rotation amount to be provided to a first signal in relay by the first relay station so that relay signals of the first signal arrive at the reception station in the same phase and at the same time after a first time length from the head of a slot. The first signal may be a signal transmitted from the transmission station to the reception station. The first relay station may be a relay station in which the controller is provided, for example, in the case where the controller is provided in the relay station. For example, in the case where the controller is provided in the control device, the first relay station may be one or more relay stations that actually perform relay among the one or more relay stations.

The controller may acquire the first delay time and the first phase rotation amount on the basis of radio propagation characteristics between the transmission station and the first relay station and radio propagation characteristics between the reception station and the first relay station. The first relay station may provide the first delay and the first phase rotation amount in non-regenerative relay of the first signal. The radio propagation characteristics may include, for example, a propagation delay, a delay spread and a phase rotation amount. However, the radio propagation characteristics are not limited to these.

The first delay time may be acquired by, for example, calculating backwards a transmission timing at the first relay station on the basis of the propagation delay between the first relay station and the reception station so that a radio wave reaches the reception station from the first relay station after the first time length from the head of the slot. More specifically, the controller may acquire the first delay time so that the relay signal of the first signal is transmitted from the first relay station after a second time length from the head of the slot, the second time length being obtained by subtracting the propagation delay between the first relay station and the reception station from the first time length.

By obtaining the first phase rotation amount so as to cancel a phase rotation amount to be applied to the relay signals on a radio propagation path, phases of the relay signals relayed by the respective relay stations are aligned. More specifically, the controller may acquire, as the first phase rotation amount, a value obtained by subtracting a phase rotation amount to be applied at a transmitter of the first relay station, a phase rotation amount to be applied on a propagation path from the transmission station to the first relay station and a phase rotation amount to be applied on a propagation path from the first relay station to the reception station from a phase rotation amount to be applied at a receiver of the first relay station.

According to one aspect of the present disclosure, the respective relay stations that relay the first signal from the transmission station to the reception station provide the first delay time and the first phase rotation amount to the relay signals so that the relay signals arrive at the reception station at the same time and in the same phase. As a result of this, a plurality of relay signals are received at the same time and in the same phase, and thus, signal power when the plurality of relay signals are synthesized becomes a square of an amplitude, so that it is possible to improve an SNR at the reception station.

In one aspect of the present disclosure, each of the one or more relay stations may include a first filter configured to perform filtering to suppress interference between a signal received from the transmission station and the signal to be transmitted to the reception station, the interference occurring in each of the relay stations. The interference between the signal received from the transmission station and the signal to be transmitted to the reception station is also referred to as self interference. The first filter provides the first delay time to the first signal by the filtering and provides the first phase rotation amount to the first signal after the filtering. The first filter is, for example, a finite impulse response (FIR) filter. By filtering the relay signal by the first filter, it is possible to provide the first delay time and the first phase rotation amount while suppressing self interference of the relay signal.

In one aspect of the present disclosure, the controller may determine whether or not a relay of the first signal by the first relay station is executed. For example, the controller may determine whether or not the relay signal of the first signal transmitted from the first relay station is able to arrive at the reception station within a first time length from the head of the slot on the basis of the propagation delay between the first relay station and the reception station. In the case where it is determined that the relay signal of the first signal is able to arrive at the reception station from the first relay station within the first time length from the head of the slot, the controller determines that the relay of the first signal by the first relay station is executed. In the case where it is determined that the relay signal of the first signal is not able to arrive at the reception station from the first relay station within the first time length from the head of the slot, the controller determines that the relay of the first signal by the first relay station is not executed.

Whether or not the relay signal of the first signal transmitted from the first relay station can arrive at the reception station within the first time length from the head of the slot may be determined by, for example, determining whether or not a total time length of a propagation delay between the transmission station and the first relay station, a delay spread between the transmission station and the first relay station, a processing delay at the first relay station, and the propagation delay between the first relay station and the reception station is equal to or less than the first time length.

According to one aspect of the present disclosure, a relay signal does not reach the reception station at a timing other than a timing after the first time length from the head of the slot during a period of cyclic prefix in which the reception signal is subjected to equalization processing, so that a sufficient SNR can be efficiently obtained. This is because, during the period of cyclic prefix, it is possible to prevent occurrence of the relay signals that cancel the amplitudes by synthesis of the relay signals.

In one aspect of the present disclosure, the communication system may further include a control device configured to manage a radio line. The control device may acquire the first time length on the basis of the radio propagation characteristics between the transmission station and the reception station and the respective radio propagation characteristics between the one or more relay stations and the reception station and may notify the one or more relay stations of the first time length. The first time length may be acquired by, for example, summing a propagation delay between the transmission station and the reception station, a delay spread between the transmission station and the reception station, and a delay occurring by relay by one relay station among the one or more relay stations. By acquiring the first time length in this manner, it is possible to involve more relay stations in relay of the first signal and enable more relay signals to arrive at the reception station. As a result of more relay signals arriving at the reception station at the same time and in the same phase, the reception station can obtain a greater SNR.

Another aspect of the present disclosure can also be specified as a method in which a computer executes processing to be executed in the above communication system. Specifically, the method is a method including, by a computer, acquiring, for at least a first relay station among one or more relay stations that relay a first signal from a transmission station to a reception station without demodulating or decoding the first signal, a first delay time and a first phase rotation amount to be provided to the first signal in relay by the first relay station on the basis of radio propagation characteristics between the transmission station and the first relay station and radio propagation characteristics between the reception station and the first relay station so that one or more relay signals of the first signal relayed by the one or more relay stations arrive at the reception station at the same time and in the same phase after a first time length from a head of a slot in a radio frame which is synchronous among the transmission station, the reception station, and the one or more relay stations and in which the first signal is transmitted, and causing the first relay station to provide the first delay time and the first phase rotation amount to the first signal.

Further, another aspect of the present disclosure can also be specified as a relay station or a control device that executes the processing of the method. Further, other aspects can also be specified as a program for causing the relay station or the control device to execute the processing of the method and a computer-readable non-transitory storage medium in which the program is recorded.

In the following, embodiments of the present disclosure will be described with reference to the drawings. The configuration of the embodiments described below are examples, and the present disclosure is not limited to the configuration of the embodiments.

<First embodiment>

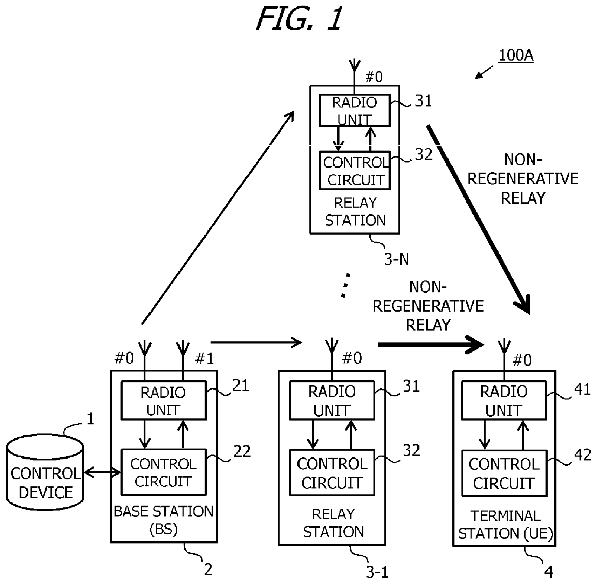

Fig. 1 is a diagram illustrating an example of a system configuration of a communication system 100A according to a first embodiment. The communication system 100A includes a control device 1, a base station 2, relay stations 3 (3-1, 3-N) and a terminal station 4.

The control device 1 is a device on a core network to which the base station 2 is connected. However, the control device 1 can be considered as a core network itself or a system included in a core network. The core network includes, for example, an optical fiber network. The control device 1 controls the base station 2, the relay stations 3 and the terminal station 4 and provides a communication service to the terminal station 4.

The base station 2 provides a radio access network to the terminal station 4. An area in which radio communication is possible on the radio access network is also referred to as a cell. In the first embodiment, the base station 2 includes one or more antennas (for example, #0 and #1), a radio unit 21 to be connected to these one or more antennas, and a control circuit 22. The control circuit 22 includes, for example, a processor and a memory. The processor controls communication with the control device 1 and radio communication with the relay stations 3 and the terminal station 4 by a computer program on the memory.

The terminal station 4 is, for example, a mobile station such as a smartphone, a tablet terminal, a wearable terminal and an in-vehicle data communication device. However, the terminal station 4 is not limited to this and may be a stationary terminal device. For example, the terminal device is connected to the radio access network in a range of a cell provided by the base station 2. A relay station 3 relays radio communication between the base station 2 and the terminal station 4. The relay station 3 is, for example, a small base station, a mobile base station, an in-vehicle device, a smartphone, or the like. In the first embodiment, the relay station 3 is a device selected as a relay station by the control device 1 among devices having a configuration that enables non-regenerative relay.

The control device 1 selects one or more devices located in the range of the cell provided by the base station 2 as the relay station 3 upon occurrence of a connection request from the terminal station 4 and instructs the one or more relay stations 3 to relay radio communication. In the first embodiment, in the case where a plurality of relay stations 3 are individually distinguished from one another, branch numbers like relay stations 3-1, ..., 3-N are assigned. Here, a branch number N is an integer indicating the number of candidates for the relay station 3. Fig. 1 illustrates the relay stations 3-1 and 3-N as an example. However, in the case where the relay stations 3-1, ..., 3-N are collectively referred, they are simply referred to as the relay station 3.

The relay station 3 includes one or more antennas (for example, #0), a radio unit 31 to be connected to each of these one or more antennas and a control circuit 32 in a similar manner to the base station 2.

The terminal station 4 includes one or more antennas (for example #0), a radio unit 41 to be connected to the one or more antennas, and a control circuit 42. For example, by a mobile station within a cell requesting connection to the radio access network to the base station 2 and the mobile station being connected to the radio access network, the mobile station operates as the terminal station 4. The mobile station within the cell may directly request connection to the radio access network to the base station 2. Alternatively, the mobile station within the cell may request connection to the radio access network to the base station 2 via a device that operates as the relay station 3 within the cell. The terminal station 4 can be said as a station that can perform communication with the base station 2 via one of the one or more relay stations 3 or without interposition of any of the one or more relay stations 3.

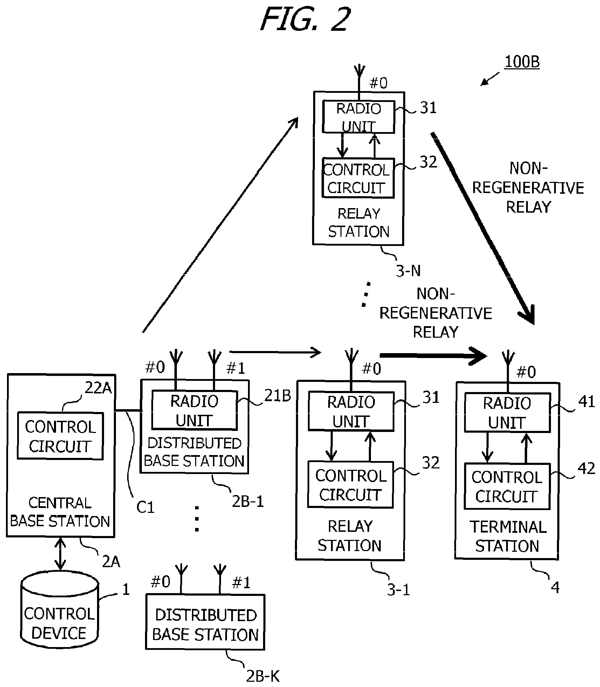

Fig. 2 is a diagram illustrating an example of a system configuration of a communication system 100B. In the first embodiment, the communication system 100B may be employed as the system configuration. The communication system 100B includes a central base station 2A and one or more distributed base stations 2B in place of the base station 2 compared with the communication system 100A in Fig. 1. In the case where the one or more distributed base stations 2B are individually distinguished from one another, branch number like distributed base stations 2B-1, ..., 2B-K are assigned. Here, a branch number K is an integer indicating the number of distributed base stations. Fig. 2 illustrates the distributed base stations 2B-1 and 2B-K as an example. In the case where the distributed base stations 2B-1, ..., 2B-K are collectively referred, they are simply referred to as the distributed base station 2B.

The central base station 2A includes a control circuit 22A. Further, the distributed base station 2B includes a radio unit 21B. The control circuit 22A of the central base station 2A and the radio unit 21B of the distributed base station 2B are, for example, connected with an optical fiber C1 or a radio network. A topology of the optical fiber C1 that connects the central base station 2A and a plurality of distributed base stations 2B is not limited to a specific topology. For example, the topology of the optical fiber C1 may be one-to-one connection among nodes, a network that branches with increasing distance from the central base station 2A, a star network, a ring network, or the like. Further, in the case where the control circuit 22A of the central base station 2A is connected to the radio unit 21B of the distributed base station 2B with a radio network, adopted radio network standards and protocol are not limited to specific ones.

The control circuit 22A includes a processor and a memory in a similar manner to the control circuit 22 in Fig. 1. The processor controls communication with the control device 1 and radio communication with the relay station 3 and the terminal station 4 by a computer program on the memory. In other words, the control circuit 22A controls radio communication with the relay station 3 and the terminal station 4 via the radio unit 21B of the one or more distributed base stations 2B.

In the first embodiment, it is assumed that the following is employed in the communication system 100. In the communication system 100, the same frequency channel is used in uplink and downlink by time-division multiplex. Further, a slot timing of a radio frame is synchronous among the base station 2, the relay station 3 and the terminal station 4. In the communication system 100, a block transmission scheme having cyclic prefix such as cyclic prefix-orthogonal frequency division multiplexing (CP-OFDM) is employed as a radio modulation scheme. Further, the relay station 3 shares resource block information to be used by the terminal station 4 which is a relay target in uplink and downlink. Note that the uplink is a link in a direction from the terminal station 4 to the base station 2. The downlink is a link in a direction from the base station 2 to the terminal station 4. In the first embodiment, a case where non-regenerative relay is performed in a downlink direction will be described. In other words, in the first embodiment, the transmission station is the base station 2, and the reception station is the terminal station 4.

In the first embodiment, each relay station 3 provides a delay and phase rotation to the relay signal so that the relay signals arrive at the terminal station 4 at the same time and in the same phase. A timing at which the relay signal is caused to arrive at the terminal station 4 is acquired by the control device 1, and the control device 1 notifies each relay station 3. Each relay station 3 acquires a delay time to be provided to the relay signal on the basis of radio propagation characteristics between the base station 2 and the relay station 3 and radio propagation characteristics between the relay station 3 and the terminal station 4 so that the relay signal arrives at the base station 2 at the notified timing. The radio propagation characteristics include, for example, a propagation delay, a delay spread, a phase rotation amount, and the like. However, information included in the radio propagation characteristics is not limited to these. The propagation delay is a time length from when a signal is transmitted from a transmission side device until when the signal reaches a reception side device. The delay spread is a time length from when a signal first arrives at the reception side device until when reception of the signal is completed.

Further, each relay station 3 acquires the phase rotation amount to be provided to the relay signal so that a phase rotation amount to be provided on a propagation path from the base station 2 to the relay station 3, a phase rotation amount to be provided in relay processing at the relay station 3 and a phase rotation amount to be provided on a propagation path from the relay station 3 to the terminal station 4 are cancelled. By this means, a plurality of relay signals relayed by the respective relay stations 3 arrive at the terminal station 4 at the same time and in the same phase. At the terminal station 4, the plurality of relay signals that arrive at the same time and in the same phase are synthesized, thereby an amplitude of a synthesized wave is amplified, and as a result of this, an SNR also exponentially increases.

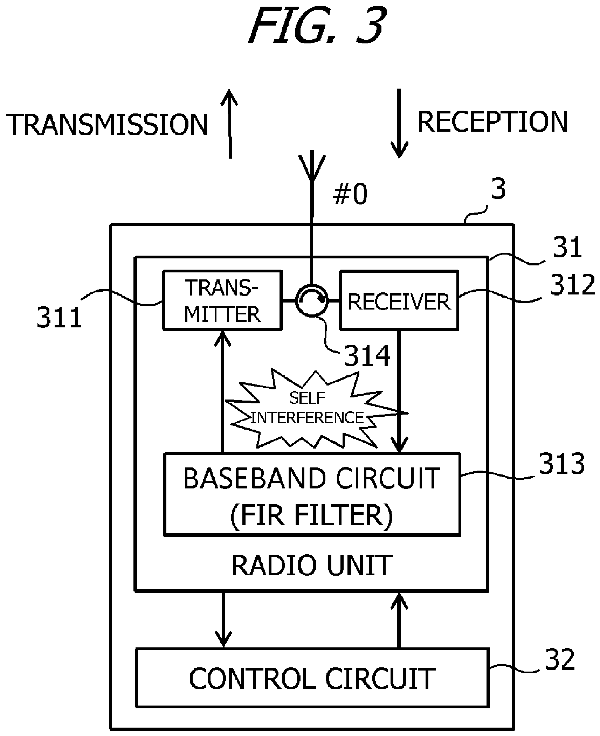

Fig. 3 is a diagram illustrating an example of a hardware configuration of the relay station 3. The relay station 3 includes the radio unit 31 and the control circuit 32. The radio unit 31 of the relay station 3 includes a transmitter 311, a receiver 312 and a baseband circuit 313. The transmitter 311 and the receiver 312 are connected to the antenna (#0) via a circulator 314. In other words, the transmitter 311, the receiver 312 and the antenna (#0) are connected to three ports of the circulator 314. A transmission signal from the transmitter 311 is input to, for example, the first port of the circulator 314 and transmitted to the antenna (#0) from the second port. Further, a reception signal received at the antenna (#0) is input to the second port of the circulator 314 and transmitted to the receiver 312 from the third port.

Here, a power difference between the transmission signal and the reception signal is, for example, approximately 100 dB. On the other hand, isolation of the circulator 314 is approximately 30 dB, and part of the transmission signal interferes with the reception signal. Interference between part of the transmission signal and the reception signal at the radio unit 31 is referred to as self interference. The self interference is suppressed by using a radio frequency (RF) analog filter within the receiver 312 and an FIR filter within the baseband circuit 313 in conjunction with each other.

The receiver 312 receives the reception signal from the antenna (#0) via the circulator 314. The receiver 312 includes a quadrature detection circuit and an analog-to-digital (AD) converter. The receiver 312 down-converts the reception signal by quadrature detection and further converts the down-converted reception signal into digital data by the AD converter to obtain a baseband signal. The receiver 312 outputs the obtained baseband signal to the baseband circuit 313.

The baseband circuit 313 includes an FIR filter. The baseband circuit 313 suppresses a transmission signal which is mixed into the reception signal and which causes self interference and delays the reception signal by a predetermined delay time by the FIR filter. The baseband circuit 313 outputs the reception signal filtered by the FIR filter to the transmitter 311.

The transmitter 311 includes a digital-to-analog (DA) converter and a modulation circuit. The transmitter 311 converts the reception signal from the baseband circuit 313 into an analog signal and generates an RF signal by the modulation circuit. The transmitter 311 transmits the RF signal from the antenna (#0) via the circulator 314 as the relay signal.

The control circuit 32 is, for example, a processor such as a CPU or an arithmetic circuit such as an FPGA. The control circuit 32 controls non-regenerative relay processing. More specifically, the control circuit 32 measures radio propagation characteristics of a propagation path, notifies the control device 1 of the measurement result or sets the FIR filter. The control circuit 32 is an example of the "controller" of the "relay station".

Note that the hardware configuration of the relay station 3 is not limited to that illustrated in Fig. 3. For example, the relay station 3 may include a plurality of antennas. In the case where the relay station 3 includes the plurality of antennas, the plurality of antennas may be respectively connected to radio units or may be connected to one radio unit. Further, the relay station 3 may separately include an antenna for control channel to which the control circuit 32 is to be connected.

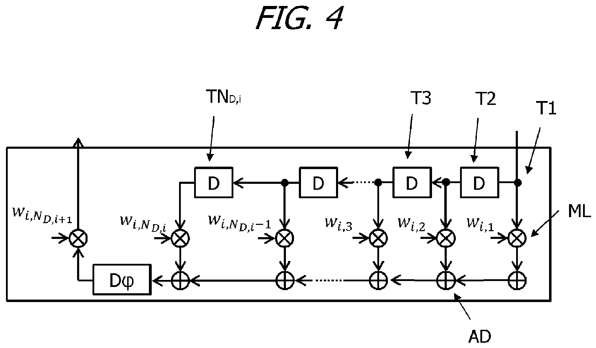

Fig. 4 is a diagram illustrating an example of a configuration of the FIR filter according to the first embodiment. The FIR filter includes taps (T1, T2, ..., TN_(D, i)) of N_(D, i) stages as a configuration for suppressing self interference. Characters in brackets after underlines after alphabets correspond to subscripts in the drawing. The tap T1 weights an input signal with a weight w_(i, 1) by a multiplier ML without interposition of a delayer D. The tap T2 delays the input signal by the delayer D (delay time $\tau$_(D)) and weights the delayed input signal with a weight w_(i, 2) by the multiplier ML. The tap T3 and subsequent taps also perform similar processing. Thus, in the tap TN_(D, i) in the last stage, a delay of a delay time $\tau$_(D)$\times$(N_(D, i)-1) and a weight w_(i, N_(D, i)) are applied to the input signal to the tap T1 (input signal to the FIR filter). Each of the signals processed at the respective taps (T1, T2, ..., TN_(D, i)) is added by an adder AD.

By the above-described configuration, the input signal to the FIR filter is weighted averaged, an interference signal other than the reception signal and noise are removed, and the signal is delayed by a delay time $\tau$_(D)$\times$(N_(D, i)-1).

In the first embodiment, the FIR filter has a configuration for causing the relay signal to reach the terminal station 4 at the same time and in the same phase as other relay signals in addition to the above-described configuration for suppressing self interference. The FIR filter according to the first embodiment includes a delayer D$\varphi$ that further adds a delay and the multiplier ML that further performs weighting to the signal to which the delay is added and which is subjected to weighted averaging, by the taps from the tap T1 in the first stage to the tap TN_(D, i) in the last stage. The delayer D$\varphi$ adds a signal of a delay time for causing the relay signal to reach the terminal station 4 at the same time as other relay signals. The multiplier ML performs weighting with a weight w_(i, N_(D, i+1)). The weight w_(i, N_(D, i+1)) is a weight for providing phase rotation to the relay signal so as to cause the relay signal to reach the terminal station 4 in the same phase as other relay signals.

The number of taps N_(D, i) to be used in the FIR filter, the delay time to be provided at the delayer D$\varphi$ and the weights from the weight w_(i, 1) to the weight w_(i, N_(D, i)+1) are acquired by the control circuit 32. Details will be described later.

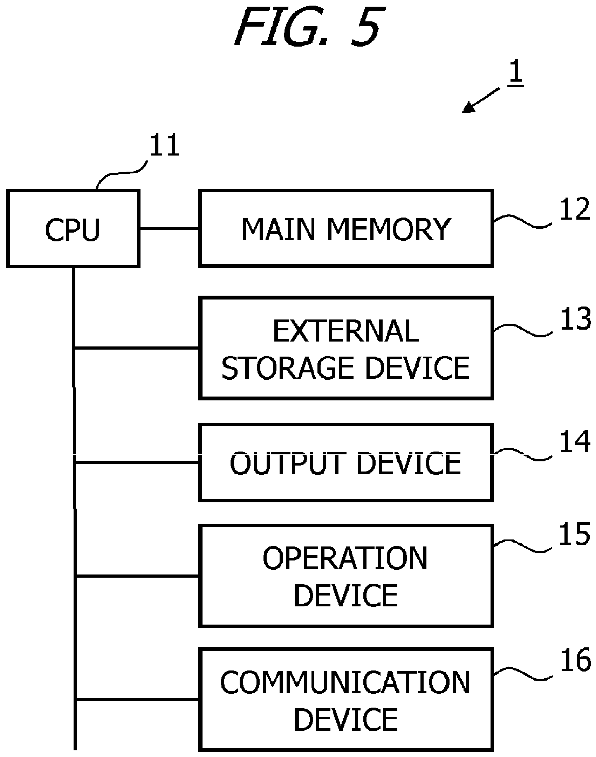

Fig. 5 is a diagram illustrating a hardware configuration of the control device 1. The control device 1 includes a CPU 11, a main memory 12 and external equipment and executes communication processing and information processing by a computer program. The CPU 11 is also referred to as a processor. The CPU 11 is not limited to a single processor and may have a multiprocessor configuration. Further, the CPU 11 may include a graphics processing unit (GPU), a digital signal processor (DSP), or the like. Further, the CPU 11 may coordinate with a hardware circuit such as a field programmable gate array (FPGA). Examples of the external equipment can include an external storage device 13, an output device 14, an operation device 15 and a communication device 16.

The CPU 11 executes a computer program loaded to the main memory 12 so as to be executable and provides processing of the control device 1. The main memory 12 stores a computer program to be executed by the CPU 11, data to be processed by the CPU 11, and the like. The main memory 12 is a dynamic random access memory (DRAM), a static random access memory (SRAM), a read only memory (ROM), or the like. Further, the external storage device 13 is, for example, used as a storage area that supports the main memory 12 and stores a computer program to be executed by the CPU 11, data to be processed by the CPU 11, and the like. The external storage device 13 is a hard disk drive, a solid state drive (SSD), or the like. Further, a drive device of a detachable storage medium may be connected to the control device 1. The detachable storage medium is, for example, a Blu-ray disk, a digital versatile disc (DVD), a compact disc (CD), a flash memory card, or the like. The CPU 11 is an example of the "controller" of the "control device".

The output device 14 is, for example, a display device such as a liquid crystal display and an electro luminescence panel. However, the output device 14 may include a speaker or other devices that output sound. The operation device 15 is, for example, a touch panel, or the like, in which a touch sensor is superimposed on a display. The communication device 16, for example, performs communication with the base station 2 and an external network such as the Internet via an optical fiber. The communication device 16 is, for example, gateway connected to the base station 2 and a gateway that performs communication with an external network such as the Internet. The communication device 16 may be one device or a combination of a plurality of devices. Note that a hardware configuration of the control device 1 is not limited to that illustrated in Fig. 5.

<Control method>

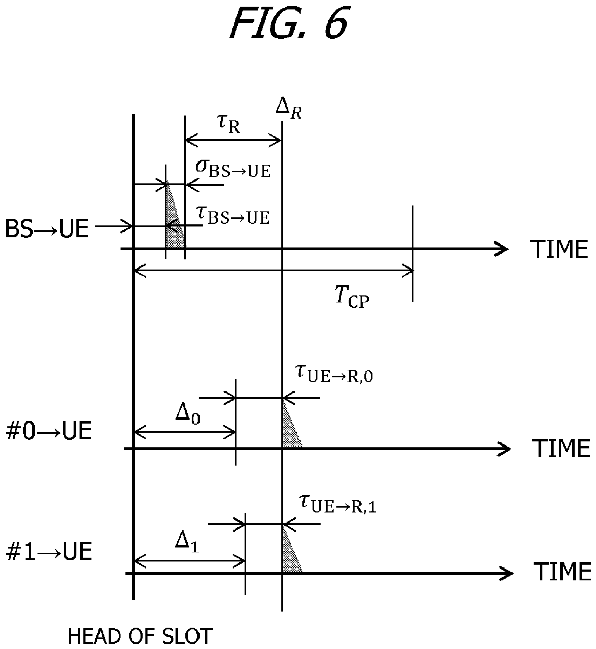

Fig. 6 is a diagram illustrating an example of transmission timings and arrival timings of a directly delivered signal from the base station 2 and a relay signal from the relay station 3. Fig. 6 illustrates an example of a case where non-regenerative relay is performed by two relay stations 3 of a relay station #0 and a relay station #1. In other words, Fig. 6 is graphs indicating three signals received by the terminal station 4 including a directly delivered signal ("BS→UE" in the drawing) that arrives at the terminal station 4 from the base station 2, a relay signal ("#0→UE" in the drawing) that arrives at the terminal station 4 from the relay station #0 and a relay signal ("#1→UE" in the drawing) that arrives at the terminal station 4 from the relay station #1. Each graph in Fig. 6 indicates time on a horizontal axis and signal received power on a vertical axis. Further, a starting point of each graph indicated in Fig. 6 is a head of the slot.

First, it is assumed that CP-OFDM is employed in the communication system 100, and thus, the directly delivered signal from the base station 2 and the relay signals from the respective relay stations 3 are requested to arrive at the terminal station 4 during a cyclic prefix length Tcp. Thus, an arrival timing $\Delta R$ of the relay signals at the terminal station 4 is set shorter than the cyclic prefix length Tcp. Further, phases of the directly delivered signal from the base station 2 and the relay signals from the respective relay stations 3 are not the same, and thus, there is a possibility that if arrival at the terminal station 4 overlaps, an SNR improvement effect is not sufficiently obtained. Thus, to prevent overlapping of the directly delivered signal from the base station 2 and the relay signals from the respective relay stations 3, $\Delta R$ is set longer than a total time length of a propagation delay $\tau\_(BS \to UE)$ and a delay spread $\sigma\_(BS \to UE)$ between the base station 2 and the terminal station 4.

Thus, in the first embodiment, the delay time $\Delta R$ from the head of the slot, which becomes an arrival timing of the relay signal at the terminal station 4 is acquired using the following expression (1).

$$\Delta_R = \tau_{BS \to UE} + \sigma_{BS \to UE} + \tau_R \cdots (\text{EXPRESSION 1})$$

The term $\tau\_(R)$ is a value in which a processing delay at the relay station 3 and a propagation delay between the relay station 3 and the terminal station 4 are taken into account. The value of $\tau\_(R)$ is a value obtained by adding $+\alpha$ to a sum of a maximum value of the processing delay at the relay station 3 and a maximum value of the propagation delay between the relay station 3 and the terminal station 4 among the plurality of relay stations 3. The value of $\tau\_(R)$ is set by the control device 1.

The relay station 3 transmits the relay signal while providing a delay to the relay signal so that the relay signal reaches the terminal station 4 at $\Delta R$ from the head of the slot. A transmission timing of the relay signal of the relay station 3, that is, a delay time $\Delta i$ from the head of the slot is acquired using the following expression (2) assuming that the propagation delay between the relay station 3 and the terminal station 4 is $\tau\_(UE \to R, i)$. The variable i is a variable indicating the relay station 3 and takes a value from 0 to K-1 (K: the number of the relay stations 3).

$$\Delta_i = \Delta_R - \tau_{UE \to R, i} \cdots (\text{EXPRESSION 2})$$

The relay station 3 receives the relay signal after a total time length of the propagation delay $\tau\_(BS \to R, i)$ between the base station 2 and the relay station 3 and the a delay spread $\sigma\_(BS \to R, i)$ from the head of the slot. Thus, a delay time $\varphi i$ to be provided to the relay signal at the relay station 3 is acquired using the following expression (3).

$$\varphi_i = \Delta_i - \tau_{BS \to R, i} - \sigma_{BS \to R, i} \cdots (\text{EXPRESSION 3})$$

The delay time $\varphi i$ to be provided to the relay signal at the relay station 3 is an example of the "first delay". The delay time $\Delta R$ is an example of the "first time length". The propagation delay $\tau\_(UE \to R, i)$ between the relay station 3 and the terminal station 4 is an example of the "propagation delay between the first relay station and the reception station". A propagation delay $\tau\_(BS \to UE)$ between the base station 2 and the terminal station 4 is an example of the "propagation delay between the transmission station and the reception station". The delay spread $\sigma\_(BS \to R, i)$ between the base station 2 and the terminal station 4 is an example of the "delay spread between the transmission station and the reception station". The expression $\tau\_(R)$ is an example of the "delay occurring in relay by one relay station among the one or more relay stations".

Next, a phase rotation amount $\theta i$ to be provided to the relay signal at the relay station 3 to make the phases of the relay signals arriving at the terminal station 4 the same will be described. The following phase rotation amounts are applied to the relay signal to be relayed by the relay station 3 until the relay signal arrives at the terminal station 4.

(1) A phase rotation amount $\theta\_(BS \to R, i)$ to be applied on a propagation path between the base station 2 and the relay station 3

(2) A phase rotation amount $\theta\_(RX, i)$ to be applied at the receiver 312 of the relay station 3 when the signal is received from the base station 2

(3) A phase rotation amount θ_(TX, i) to be applied at the transmitter 311 of the relay station 3 when the relay signal is transmitted from the relay station 3

(4) A phase rotation amount θ_(UE→R, i) to be applied on a propagation path between the relay station 3 and the terminal station 4

The phase rotation amount θ_(BS→R, i) and the phase rotation amount θ_(UE→R, i) are respectively measurement values measured on the basis of a reference signal transmitted from the base station 2 or the terminal station 4. Thus, each of the phase rotation amount θ_(BS→R, i) and the phase rotation amount θ_(UE→R, i) includes the phase rotation amount θ_(RX, i) to be applied at the receiver 312 of the relay station 3. Thus, the phase rotation amount θi to be applied to the relay signal is acquired using the following expression (4).

$$\theta_i = \left(\theta_{\mathrm{BS}\to\mathrm{R},i} - \theta_{\mathrm{RX},i}\right) + \theta_{\mathrm{TX},i} + \theta_{\mathrm{RX},i} + \left(\theta_{\mathrm{UE}\to\mathrm{R},i} - \theta_{\mathrm{RX},i}\right)$$

$$= \theta_{\mathrm{BS}\to\mathrm{R},i} + \theta_{\mathrm{UE}\to\mathrm{R},i} + \theta_{\mathrm{TX},i} - \theta_{\mathrm{RX},i} \qquad\qquad \cdots(\mathrm{EXPRESSION\ 4})$$

The phase rotation amount θi is an example of the "first phase rotation amount". The phase rotation amount θ_(BS→R, i) to be applied on the propagation path between the base station 2 and the relay station 3 is an example of the "phase rotation amount to be applied on a propagation path from the transmission station to the first relay station". The phase rotation amount θ_(UE→R, i) to be applied on the propagation path between the relay station 3 and the terminal station 4 is an example of the "phase rotation amount to be applied on a propagation path from the first relay station to the reception station". The phase rotation amount θ_(RX, i) to be applied at the receiver 312 of the relay station 3 is an example of the "phase rotation amount to be applied at the receiver". The phase rotation amount θ_(TX, i) to be applied at the transmitter 311 is an example of the "phase rotation amount to be applied at the transmitter".

<Processing flow>

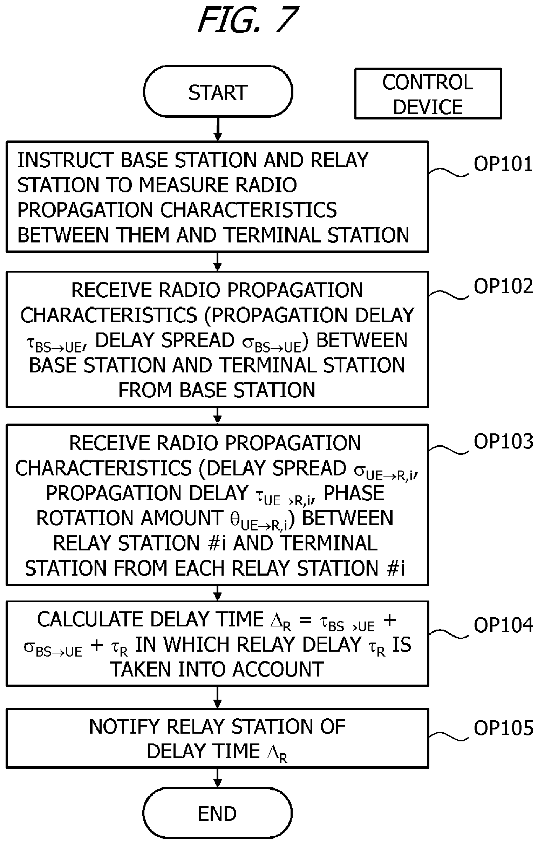

Fig. 7 is an example of a flowchart of the processing of the control device 1. The processing illustrated in Fig. 7 is, for example, started in the case where a connection request is received from the terminal station 4 and executed for each radio frame until communication of the terminal station 4 ends. While the processing illustrated in Fig. 7 is executed by the CPU 11 of the control device 1, description will be provided assuming that the control device 1 executes the processing for convenience sake.

In OP101, the control device 1 instructs the base station 2 and each relay station 3 to measure radio propagation characteristics to the terminal station 4. The radio propagation characteristics include, for example, a propagation delay, a delay spread time and a phase rotation amount. Note that the relay station 3 has already selected before the processing illustrated in Fig. 7.

In OP102, the control device 1 receives from the base station 2, a measurement result of the radio propagation characteristics to the terminal station 4. In OP102, the control device 1 acquires the propagation delay τ_(BS→UE) and the delay spread σ_(BS→UE) between the base station 2 and the terminal station 4.

In OP103, the control device 1 receives from each relay station 3, a measurement result of the radio propagation characteristics to the terminal station 4. In OP103, the control device 1 acquires the propagation delay τ_(UE→R, i), the delay spread σ_(UE→R, i), and the phase rotation amount θ_(UE→R, i) between each relay station 3 and the terminal station 4.

In OP104, the control device 1 calculates the delay time ΔR that is an arrival timing of the relay signal at the terminal station 4. Note that in OP104, the control device 1 may acquire τ_(R) in which the propagation delay between the relay station 3 and the terminal station 4 and the processing delay at the relay station 3 are taken into account.

In OP105, the control device 1 notifies each relay station 3 of the delay time ΔR. Note that communication between the control device 1, and the base station 2 and each relay station 3 in Fig. 7 is performed through a control channel.

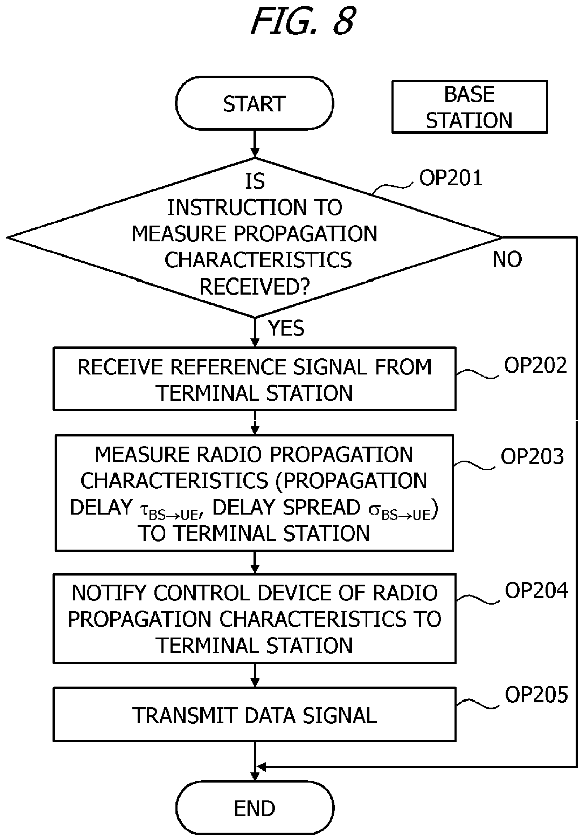

Fig. 8 is an example of a flowchart of processing of the base station 2. The processing illustrated in Fig. 8 is repeatedly executed during operation of the base station 2. While the processing illustrated in Fig. 8 is executed by the control circuit 22 of the base station 2 or the control circuit 22A of the central base station 2A, description will be provided assuming that the base station 2 executes the processing for convenience sake.

In OP201, the base station 2 determines whether or not an instruction to measure the radio propagation characteristics is received from the control device 1. In the case where an instruction to measure the radio propagation characteristics is received from the control device 1 (OP201: Yes), the processing proceeds to OP202. In the case where an instruction to measure the radio propagation characteristics is not received from the control device 1 (OP201: No), the processing illustrated in Fig. 8 ends.

In OP202, the base station 2 receives a reference signal transmitted from the terminal station 4 with a predetermined period. In OP203, the base station 2 measures the radio propagation characteristics between the base station 2 and the terminal station 4 on the basis of the reference signal received in OP202. The radio propagation characteristics measured in OP203 include the propagation delay $\tau_{(BS \rightarrow UE)}$ and the delay spread $\sigma_{(BS \rightarrow UE)}$ between the base station 2 and the terminal station 4. In OP204, the base station 2 notifies the control device 1 of the radio propagation characteristics between the base station 2 and the terminal station 4.

In OP205, the base station 2 transmits a data signal to the terminal station 4. Note that transmission/reception of the reference signal in OP202 and notification of the radio propagation characteristics in OP204 are preformed through the control channel. Transmission of the data signal in OP205 is performed through a data channel. Then, the processing illustrated in Fig. 8 ends.

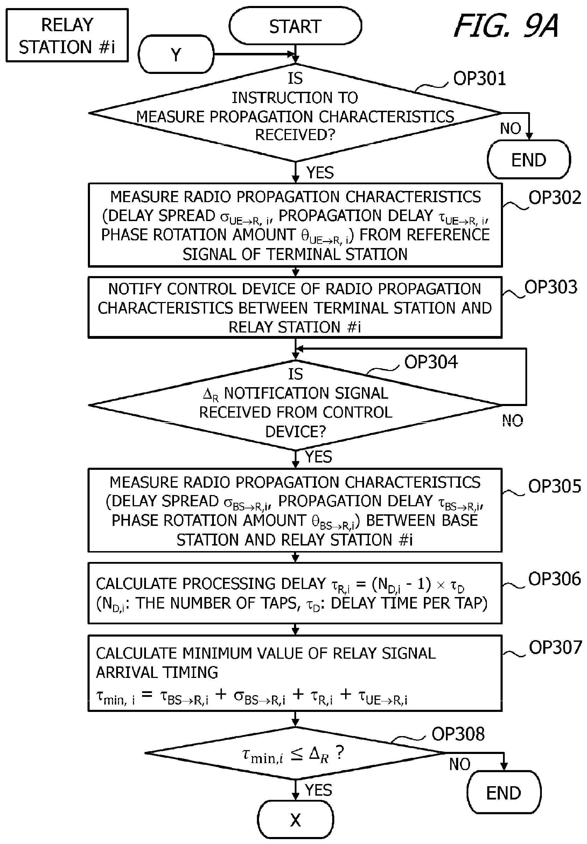

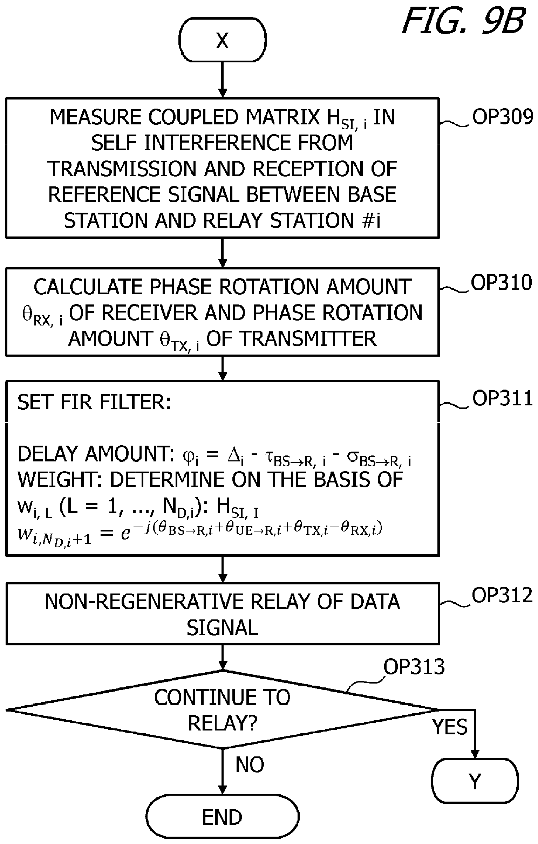

Fig. 9A and Fig. 9B are an example of a flowchart of the processing at the relay station 3. The processing illustrated in Fig. 9A and Fig. 9B is repeatedly executed during operation of the relay station 3. While the processing in Fig. 9A and Fig. 9B is executed by the control circuit 32 of the relay station 3, description will be provided assuming that the relay station 3 executes the processing for convenience sake.

In OP301, the relay station 3 determines whether or not an instruction to measure the radio propagation characteristics is received from the control device 1. In the case where an instruction to measure the radio propagation characteristics is received from the control device 1 (OP301: Yes), the processing proceeds to OP302. In the case where an instruction to measure the radio propagation characteristics is not received from the control device 1, the processing illustrated in Fig. 9A ends.

In OP302, the relay station 3 receives a reference signal transmitted from the terminal station 4 with a predetermined period and measures the radio propagation characteristics between the relay station 3 and the terminal station 4 from the reference signal. The radio propagation characteristics measured in OP302 include the propagation delay $\tau_{(UE \rightarrow R, i)}$, the delay spread $\sigma(UE \rightarrow R, i)$ and the phase rotation amount $\theta_{(UE \rightarrow R, i)}$ between the relay station 3 and the terminal station 4. In OP303, the relay station 3 notifies the control device 1 of the measurement result of the radio propagation characteristics between the relay station 3 and the terminal station 4.

In OP304, the relay station 3 determines whether or not a notification of the delay time ΔR is received from the control device 1. In a case where a notification of the delay time ΔR is received (OP304: Yes), the processing proceeds to OP305. In the case where a notification of the delay time ΔR is not received (OP304: No), the relay station 3 is put into a standby state.

In OP305, the relay station 3 measures the radio propagation characteristics between the base station 2 and the relay station 3 from the reference signal attached to a signal that makes a notification of the delay time ΔR in OP304. The radio propagation characteristics measured in OP305 include the propagation delay $\tau_{(BS \rightarrow R, i)}$, the delay spread $\sigma_{(BS \rightarrow R, i)}$ and the phase rotation amount $\theta_{(BS \rightarrow R, i)}$ between the base station 2 and the relay station 3.

The processing from OP306 to OP308 is processing of determining whether or not to relay a transmission signal of the radio frame. In OP306, the relay station 3 calculates a processing delay $\tau_{(R, i)}$ at the relay station 3. The processing delay $\tau_{(R, i)}$ is obtained by multiplying the number of taps of the FIR filter - 1 ($N_{(D, i)} - 1$) by a delay time $\tau_{(D)}$ per tap. Note that the number of taps of the FIR filter $N_{(D, i)}$ is, for example, acquired on the basis of a delay spread (seconds) of self interference and a sampling frequency (seconds) of a baseband waveform so that self interference is removed.

In OP307, the relay station 3 calculates a minimum value $\tau_{(min, i)}$ of a timing at which the relay signal arrives at the terminal station 4. The value of $\tau_{(min, i)}$ is calculated using the following expression (5).

$$\tau_{\min,i} = \tau_{BS \rightarrow R,i} + \sigma_{BS \rightarrow R,i} + \tau_{R,i} + \tau_{UE \rightarrow R,i} \cdots (\text{EXPRESSION 5})$$

The propagation delay $\tau_{(BS \rightarrow R, i)}$ between the base station 2 and the relay station 3 is an example of the "propagation delay between the transmission station and the first relay station". The delay spread $\sigma_{(BS \rightarrow R, i)}$ between the base station 2 and the relay station 3 is an example of the "delay spread between the transmission station and the first relay station". The processing delay $\tau_{(R, i)}$ at the relay station 3 is an example of the "processing delay at the first relay station". The propagation delay $\tau_{(UE \rightarrow R, i)}$ between the relay station 3 and the terminal station 4 is an example of the "propagation delay between the first relay station and the reception station". The expression $\tau_{(min, i)}$ is an example of the "total time length of the propagation delay between the transmission station and the first relay station, the delay spread between the transmission station and the first relay station, the processing delay at the first relay station, and the propagation delay between the first relay station and the reception station".

In OP308, the relay station 3 determines whether or not $\tau_{(min, i)}$ is equal to or less than ΔR. In the case where $\tau_{(min, i)}$ is equal to or less than ΔR, it indicates that the relay signal by the relay station 3 can arrive at the terminal station 4 by ΔR, and thus, the relay station 3 determines to execute relay processing of the transmission signal of the radio frame. In this case, the processing proceeds to OP309 in Fig. 9B. In the case where $\tau\_(min, i)$ is greater than $\Delta R$, it indicates that the relay signal by the relay station 3 is not able to arrive at the terminal station 4 by $\Delta R$, and thus, the relay station 3 determines not to execute relay processing of the transmission signal of the radio frame. In this case, the processing illustrated in Fig. 9A ends.

The processing illustrated in Fig. 9B is processing in the case where the relay station 3 determines to relay the transmission signal of the radio frame. In OP309, the relay station 3 measures a coupled matrix $H\_(SI, i)$ in self interference between transmission and reception by receiving the reference signal from the base station 2 and transmitting the reference signal to the base station 2.

In OP310, the relay station 3 obtains the phase rotation amount $\theta\_(RX, i)$ of the receiver 312 and the phase rotation amount $\theta\_(TX, i)$ of the transmitter 311 with reference to a look-up table held by the control circuit 32. The look-up table describes a relationship between setting values such as gains at the transmitter and the receiver and the phase rotation amounts.

In OP311, the relay station 3 acquires and sets a weight of each multiplier ML and a delay time of the delayer $D\varphi$ of the FIR filter. The delay time $\varphi i$ to be provided to the signal at the FIR filter is acquired from the delay time $\Delta R$, the propagation delay $\tau\_(UE{\rightarrow}R, i)$ between the relay station 3 and the terminal station 4, the propagation delay $\tau\_(BS{\rightarrow}R, i)$ between the base station 2 and the relay station 3, and the delay spread $\theta\_(BS{\rightarrow}R, i)$ using the above-described expression (3). The relay station 3 sets a value obtained by subtracting the processing delay $\tau\_(R, i)$ in the configuration for suppressing self interference of the FIR filter from the delay time $\varphi i$ as the delay time of the delayer $D\varphi$.

Each weight $w\_(i, L)$ (L = 1, ..., $N\_(D, i)$) from the tap T1 to the tap $TN\_(D, i)$ of the FIR filter for suppressing self interference is determined on the basis of a matrix $H\_(SI, i)$. A method for calculating the weight $w\_(i, L)$ is acquired using a publicly known method. The weight $w\_(i, N\_(D, i+1))$ is acquired using the following expression (6) to cancel the phase rotation amount $\theta i$ to be applied to the relay signal.

$$w_{i,N_{D,i+1}} = e^{-j\theta_i} = e^{-j\left(\theta_{BS\rightarrow R,i}+\theta_{UE\rightarrow R,i}+\theta_{TX,i}-\theta_{RX,i}\right)}\cdots(\text{EXPRESSION } 6)$$

In OP312, the relay station 3 executes non-regenerative relay of the data signal received from the base station 2. In OP313, the relay station 3 determines whether or not to continue relay. The relay station 3 continues relay until an instruction to stop relay is received from the control device 1. In the case where relay is continued (OP313: Yes), the processing proceeds to OP301 in Fig. 9A. In the case where relay is not continued (OP313: No), the processing illustrated in Fig. 9B ends. Note that non-regenerative relay of the data signal in OP312 is performed through the data channel, and other communication with the base station 2 or the terminal station 4 is performed through the control channel.

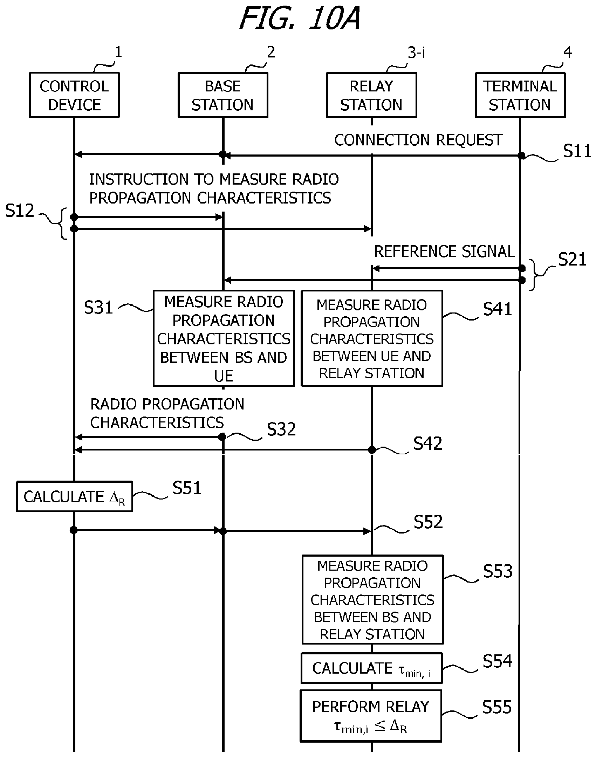

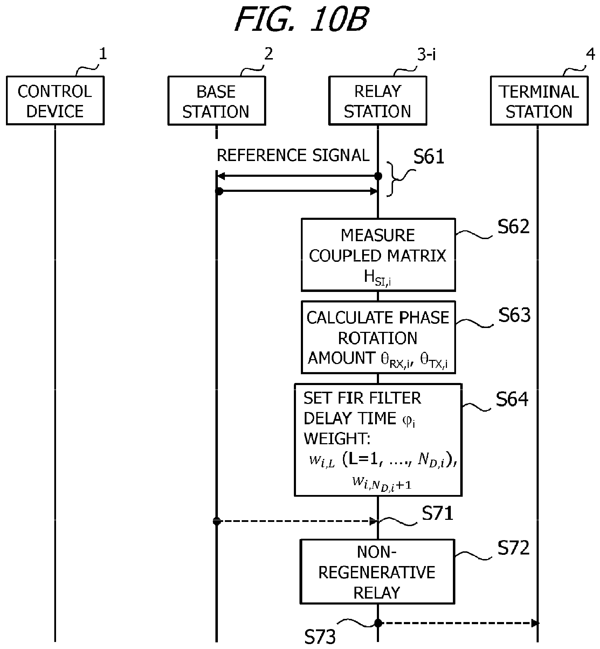

Fig. 10A and Fig. 10B are an example of sequences of processing related to non-regenerative relay according to the first embodiment. Fig. 10A and Fig. 10B are an example assuming the communication system 100A. Fig. 10A and Fig. 10B include processing sequences of the control device 1, the base station 2, the relay station 3-i and the terminal station 4. Note that in the communication system 100B, the base station 2 is divided into the central base station 2A and the one or more distributed base stations 2B. However, the processing of the control circuit 22A of the central base station 2A is similar to that in Fig. 10A and Fig. 10B. Fig. 10A and Fig. 10B indicate transmission and reception of information through the control channel with solid lines and indicate transmission and reception of information through the data channel with dashed lines.

In S11, a connection request is transmitted from the terminal station 4. The connection request is received at the base station 2 that manages a cell in which the terminal station 4 is located and transferred from the base station 2 to the control device 1. In S12, the control device 1 transmits to the base station 2 and the relay station 3-i, an instruction to measure radio propagation characteristics to the terminal station 4 (Fig. 7, OP101). The base station 2 and the relay station 3-i receive the instruction to measure the radio propagation characteristics (Fig. 8, OP201: Yes, Fig. 9A, OP301: Yes).

In S21, the terminal station 4 transmits the reference signal with a predetermined period. In S31, the base station 2 receives the reference signal from the terminal station 4 (Fig. 8, OP202) and measures the radio propagation characteristics between the base station 2 and the terminal station 4 using the reference signal (Fig. 8, OP203). In S32, the base station 2 transmits the measured radio propagation characteristics between the base station 2 and the terminal station 4 to the control device 1 (Fig. 8, OP204). The control device 1 receives the radio propagation characteristics between the base station 2 and the terminal station 4 (Fig. 7, OP102). In S41, the relay station 3-i receives the reference signal from the terminal station 4 and measures the radio propagation characteristics between the relay station 3-i and the terminal station 4 using the reference signal (Fig. 9A, OP302). In S42, the relay station 3-i transmits the measured radio propagation characteristics between the relay station 3-i and the terminal station 4 to the control device 1 (Fig. 9A, OP303). The control device 1 receives the radio propagation characteristics between the relay station 3-i and the terminal station 4 (Fig. 7, OP103).

In S51, the control device 1 calculates the delay time ΔR using the radio propagation characteristics between the base station 2 and the terminal station 4 and the radio propagation characteristics between the relay station 3-i and the terminal station 4 (Fig. 7, OP104). In S52, the control device 1 transmits the delay time ΔR to the relay station 3-i (Fig. 7, OP105). The signal that transmits the delay time ΔR is output from the control device 1 to the base station 2 and transmitted from the base station 2 to the relay station 3-i. The relay station 3-i receives the delay time ΔR (Fig. 9A, OP304: Yes).

In S53, the relay station 3-i measures the radio propagation characteristics between the base station 2 and the relay station 3-i on the basis of the reference signal attached to the signal that makes a notification of the delay time ΔR received from the base station 2 (Fig. 9A, OP305). In S54, the relay station 3-i calculates the minimum value $\tau\_(min, i)$ of the timing at which the relay signal arrives at the terminal station 4 (Fig. 9A, OP306, OP307). In S55, $\tau\_(min, i)$ is equal to or less than the delay time ΔR, and thus, the relay station 3-i determines to perform relay in the radio frame (Fig. 9A, OP308: Yes).

In S61 in Fig. 10B, the reference signal is transmitted and received between the relay station 3-i and the base station 2. In S62, the relay station 3-i measures the coupled matrix $H\_(SI, i)$ on the basis of the reference signal transmitted to and received from the base station 2 in S61 (Fig. 9B, OP309). In S63, the relay station 3-i obtains the phase rotation amount $\theta\_(RX, i)$ of the receiver 312 and the phase rotation amount $\theta\_(TX, i)$ of the transmitter 311 with reference to the look-up table held by the control circuit 32 (Fig. 9B, OP 310). In S64, the relay station 3-i calculates the delay time φi, the weight $w\_(i, L)$ (L = 1, ..., $N\_(D, i)$) and the weight $w\_(i, N\_(D, i)+1)$ of the FIR filter and sets them to the FIR filter (Fig. 9B, OP 311).

In S71, the base station 2 transmits the data signal to the terminal station 4 (Fig. 8, OP205). In S72, the relay station 3-i receives the data signal addressed to the terminal station 4 and performs non-regenerative relay (Fig. 9B, OP312). In S73, the relay station 3-i transmits the data signal to the terminal station 4. More specifically, the relay station 3-i obtains a baseband signal by converting the data signal from an analog signal to a digital signal at the receiver 312 and inputs the baseband signal to the FIR filter. The FIR filter applies the weight $w\_(i, L)$ (L = 1, ..., $N\_(D, i)$) for removing self interference, the delay time φi, and the weight $w\_(i, N\_(D, i)+1)$ for providing the phase rotation amount θi to the relay signal. The relay signal is input from the FIR filter to the transmitter 311, converted from a digital signal to an analog signal, and transmitted from the antenna to the terminal station 4.

<Operations and effects of first embodiment>

In the first embodiment, in each of a plurality of relay stations 3 that perform non-regenerative relay, a delay time and a phase rotation amount are provided to a plurality of relay signals so that the plurality of the relay signals arrive at the terminal station 4 at the same time and in the same phase. By this means, an SNR is improved as a result of the relay signals being synthesized in the same phase at the terminal station 4. Further, in the first embodiment, high-accuracy phase synchronization is desired among the base station 2, the relay station 3 and the terminal station 4, and thus, for example, a higher effect can be obtained in a frequency band equal to or less than 1 GHz.

In the first embodiment, whether or not to perform non-regenerative relay is determined in accordance with whether or not each relay station 3 can cause the relay signal to arrive at the terminal station 4 within ΔR from the head of the slot. The relay station 3 that is not able to cause the relay signal to arrive at the terminal station 4 at the same time as other relay stations 3 does not perform non-regenerative relay. By this means, a relay signal other than the relay signals that have the same phase at the timing of ΔR from the head of the slot does not reach the terminal station 4, so that a greater SNR can be obtained.

<Second embodiment>

In the first embodiment, the relay station 3 itself calculates a delay time and a phase rotation amount to be provided to a relay signal so that a plurality of relay signals arrive at the reception station at the same time and in the same phase. Furthermore, in the first embodiment, the relay station 3 itself determines whether or not to execute non-regenerative relay depending on whether or not a relay signal is able to arrive at the terminal station 4 within the delay time ΔR from the head of the slot. In the second embodiment, a device other than the relay station 3 performs these processes. In the second embodiment, explanations common to the first embodiment are omitted.

As in the first embodiment, the system configuration according to the second embodiment is either the communication system 100A illustrated in FIG. 1 or the communication system 100B illustrated in FIG. 2. A case where the control device performs determination of whether non-regenerative relay is executed by the relay station 3 or not and calculation of a delay time and a phase rotation amount to be provided to a relay signal in the relay station 3 will be described below. Hereinafter, in the second embodiment, the control device is denoted by reference numeral 1B.

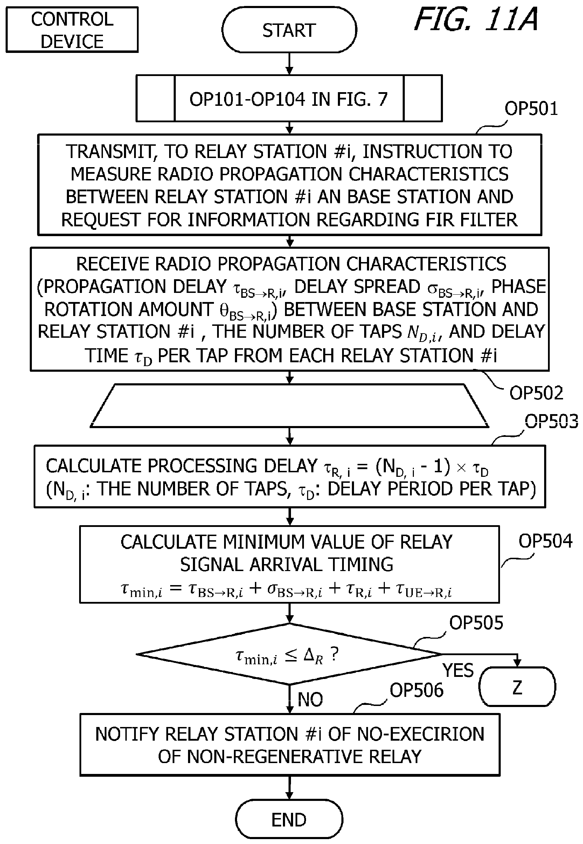

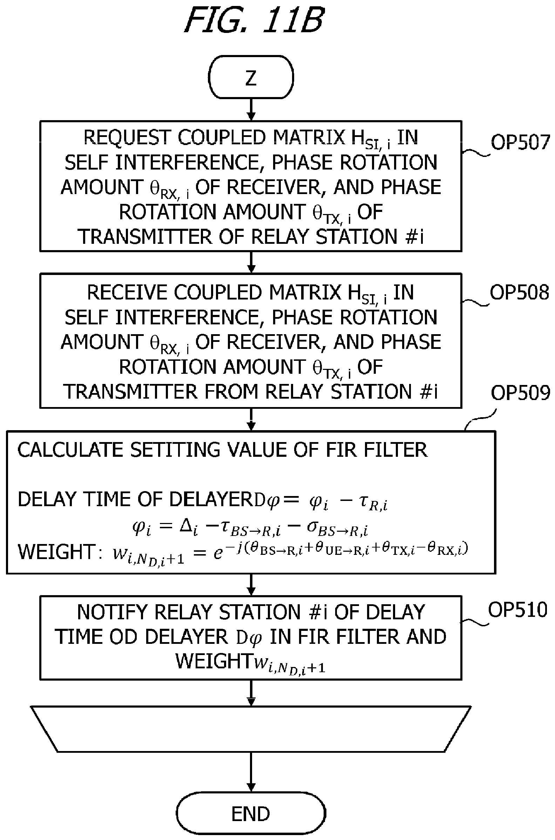

Fig. 11A and Fig. 11B are an example of a flowchart of the processing of the control device 1B according to the second embodiment. The processing illustrated in Fig. 11A and Fig. 11B is, for example, similar to the processing illustrated in Fig. 7, started in the case where a connection request is received from the terminal station 4 and executed for each radio frame until communication of the terminal station 4 ends. While the processing illustrated in Fig. 11A and Fig. 11B are executed by the CPU 11 of the control device 1, description will be provided assuming that the control device 1 executes the processing for convenience sake.

Also in the second embodiment, the control device 1B first executes the processing from OP101 to OP104 in FIG. 7. That is, the control device 1B acquires, respectively, from the base station 2 and each relay station 3, the measurement of the radio propagation characteristics between the terminal station 4 and the base station 2 and each relay station 3, and calculates the delay time ∆R which is the arrival timing of the relay signal to the terminal station 4.

In OP501, the control device 1B transmits, to each relay station 3, instructions to measure radio propagation characteristics between the relay station 3 and the base station 2 and a request for information regarding a FIR filter in the relay station 3. The information regarding the FIR filter is, for example, the number of taps of the FIR filter, and a delay time per tap.

In OP502, the control device 1B receives, from each relay station 3, a measurement result of the radio propagation characteristics between the base station 2 and the relay station 3, and the information regarding the FIR filter in the relay station 3. In OP502, the control device 1B acquires, as the measurement result of the radio propagation characteristics between the base station 2 and the relay station 3, the propagation delay $\tau\_(BS{\to}R, i)$, the delay spread $\sigma\_(BS{\to}R, i)$, and the phase rotation amount $\theta\_(BS{\to}R, i)$ between the base station 2 and the relay station 3. In OP502, the control device 1B acquires, as the information regarding the FIR filter, the number of taps of the FIR filter $N\_(D, i)$ and the delay time $\tau\_(D)$ per tap.

The processing from OP503 to OP510 is executed for each relay station 3 selected as a relay station by the control device 1B. Hereinafter, the relay station targeted for the processing from OP503 to OP510 is referred to as relay station #i.

The processing from OP503 to OP506 is processing of determining whether or not to cause the relay station #i to perform non-regenerative relay of the transmission signal of the radio frame. In OP503, the control device 1B calculates a processing delay $\tau\_(R, i)$ at the relay station #i. The processing delay $\tau\_(R, i)$ is obtained by multiplying the number of taps of the FIR filter - 1 ($N\_(D, i) - 1$) by a delay time $t\_(D)$ per tap.

In OP504, the control device 1B calculates a minimum value $\tau\_(min, i)$ of a timing at which the relay signal arrives at the terminal station 4 based on the above expression (5).

In OP505, the control device 1B determines whether or not $\tau\_(min, i)$ is equal to or less than ∆R. In the case where $\tau\_(min, i)$ is equal to or less than ∆R(OP505:YES), it indicates that the relay signal by the relay station #i can arrive at the terminal station 4 by ∆R, and thus, the control device 1B determines that relay processing of the transmission signal of the radio frame is executed by the relay station #i. In this case, the processing proceeds to OP507 in Fig. 11B.

In the case where $\tau\_(min, i)$ is greater than ∆R(OP505:NO), it indicates that the relay signal transmitted from the relay station #i is not able to arrive at the terminal station 4 by ∆R, and thus, the control device 1B determines that the relay processing of the transmission signal of the radio frame is not executed by the relay station #i. In OP506, the control device 1B notifies the relay station #i of non-implementation of non-regenerative relay through the control channel. After that, the processing illustrated in Fig. 11A ends.

The processing illustrated in Fig. 11B is processing in the case where execution of the relay processing of the transmission signal of the radio frame the relay station #i is determined. In OP507 in Fig. 11B, the control device 1B transmits, to the relay station #i, a request for a coupled matrix $H\_(SI, i)$ in self interference, the phase rotation amount $\theta\_(RX, i)$ of the receiver 312, and the phase rotation amount $\theta\_(TX, i)$ of the transmitter 311.

In OP508, the control device 1B receives, from the relay station #i, the coupled matrix $H\_(SI, i)$ in self interference between transmission and reception, the phase rotation amount $\theta\_(RX, i)$ of the receiver 312, and the phase rotation amount $\theta\_(TX, i)$ of the transmitter 311.

In OP509, the control device 1B calculates a delay time of the delayer D$\varphi$ and the weight $w\_(i, N\_(D, i+1))$ to cancel the phase rotation amount $\theta i$ to be applied to the relay signal, in the FIR filter of the relay station #i. The delay time of the delayer D$\varphi$ is acquired as a value obtained by subtracting the processing delay $\tau\_(R, i)$ from the delay time $\varphi i$ provided to the signal at the FIR filter. The delay time $\varphi i$ to be provided to the signal at the FIR filter is acquired from the delay time ∆R, the propagation delay $\tau\_(UE{\to}R, i)$ between the relay station 3 and the terminal station 4, the propagation delay $\tau\_(BS{\to}R, i)$ between the base station 2 and the relay station 3, and the delay spread $\sigma\_(BS{\to}R, i)$ using the above-described expression (3). The weight $w\_(i, N\_(D, i+1))$ is acquired using the above expression (6).

In OP510, the control device 1B notifies the relay station #i of the delay time of the delayer D$\varphi$ and weight $w\_(i, N\_(D, i+1))$ calculated in OP509. After that, the process illustrated in Fig. 11B ends.

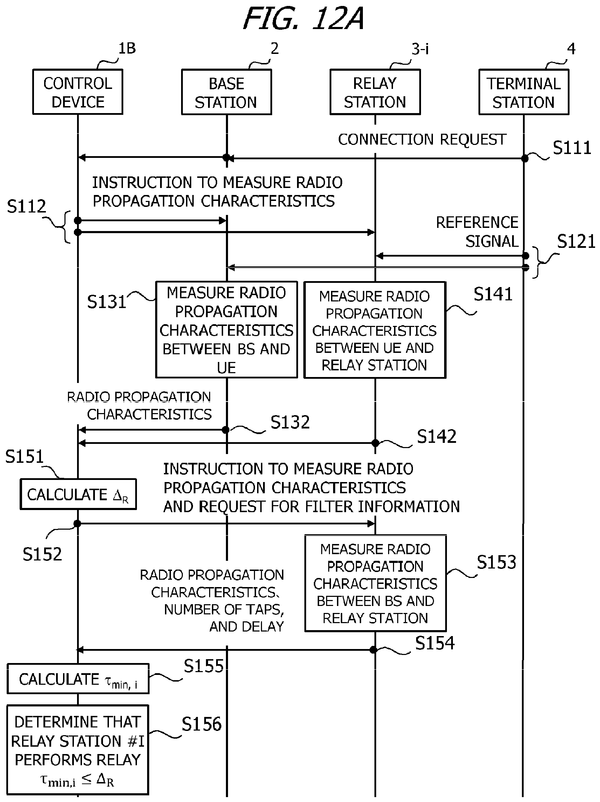

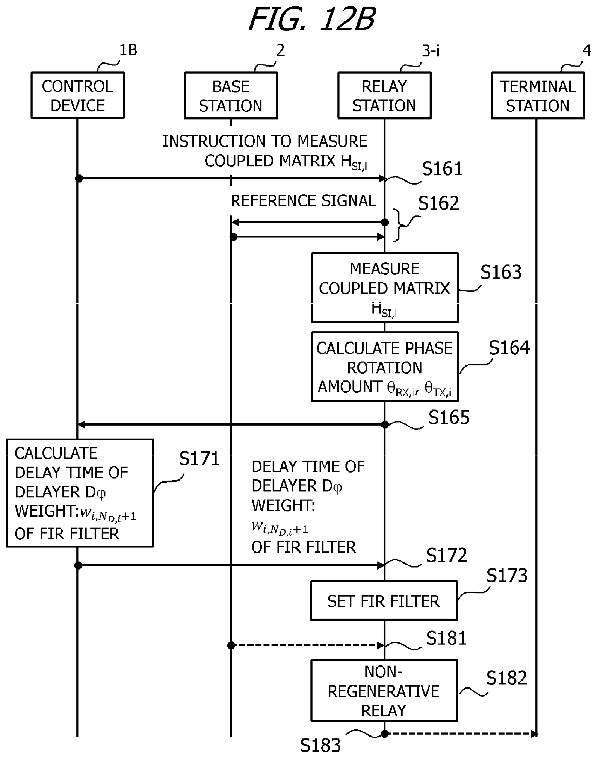

Fig. 12A and Fig. 12B are an example of sequences of processing related to non-regenerative relay according to the second embodiment. Fig. 12A and Fig. 12B are an example assuming the communication system 100A. Fig. 12A and Fig. 12B include processing sequences of the control device 1B, the base station 2, the relay station 3-i and the terminal station 4. Although there are a plurality of relay stations 3, the relay station 3-i is illustrated as a representative for convenience. Also, for each relay station 3, the similar processing to that of the relay station 3-i is performed. Note that in the communication system 100B, the base station 2 is divided into the central base station 2A and the one or more distributed base stations 2B. However, the processing of the control circuit 22A of the central base station 2A is similar to that in Fig. 12A and Fig. 12B. Fig. 12A and Fig. 12B indicate transmission and reception of information through the control channel with solid lines and indicate transmission and reception of information through the data channel with dashed lines.

S111 to S151 are similar to S11 to S51 in FIG. 10A. In S152, the control device 1B transmits, to the relay station 3-i, an instruction to measure the radio propagation characteristics between the base station 2 and the relay station 3-i and a request for information regarding the FIR filter. The instruction from the control device 1B is transmitted to the base station 2 to transmit to the relay station 3-i from the base station 2.

In S153, the relay station 3-i measures the radio propagation characteristics between the base station 2 and the relay station 3-i on the basis of the reference signal attached to the signal that is transmitted from the base station 2 in S152. In S154, the relay station 3-i transmits the radio propagation characteristics between the base station 2 and the relay station 3-i, and the information regarding the FIR filter (the number of taps of the FIR filter ($N\_(D, i)$, a delay time $\tau\_(D)$ per tap) to the control device 1B. The control device 1B receives, from the relay device 3-i, the radio propagation characteristics between the base station 2 and the relay station 3-i and the information regarding the FIR filter (Fig. 11A, OP502).

In S155, the control device 1B calculates the minimum value $\tau\_(min, i)$ of the timing at which the relay signal arrives at the terminal station 4 (Fig. 11A, OP503, OP504). In S156, $\tau\_(min, i)$ is equal to or less than the delay time $\Delta R$, and thus, the control device 1B determines that the relay in the radio frame by the relay station 3-i is executed (Fig. 11A, OP505: Yes).

In S161 in Fig, 12B, the control device 1B transmits, to the relay station 3-i, a request for the coupled matrix $H\_(SI, i)$ in self interference, the phase rotation amount $\theta\_(RX, i)$ of the receiver 312, and the phase rotation amount $\theta\_(TX, i)$ of the transmitter 311 (Fig. 11B, OP507).

In S162, the reference signal is transmitted and received between the relay station 3-i and the base station 2. In S163, the relay station 3-i measures the coupled matrix $H\_(SI, i)$ on the basis of the reference signal transmitted to and received from the base station 2 in S162. In S164, the relay station 3-i obtains the phase rotation amount $\theta\_(RX, i)$ of the receiver 312 and the phase rotation amount $\theta\_(TX, i)$ of the transmitter 311 with reference to the look-up table held by the control circuit 32. In S165, the relay station 3-i transmits, to the control device 1B, the coupled matrix $H\_(SI, i)$, the phase rotation amount $\theta\_(RX, i)$ of the receiver 312, and the phase rotation amount $\theta\_(TX, i)$ of the transmitter 311, and the control device 1B receives these (Fig. 11B, OP508).

In S171, the control device 1B calculates, for the relay station 3-i, a delay time of the delayer $D\varphi$ and the weight $w\_(i, N\_(D, i+1))$ (Fig. 11B, OP509). In S172, the control device 1B notifies the relay station 3-i of the delay time of the delayer $D\varphi$ and the weight $w\_(i, N\_(D, i+1))$ (Fig, 11B, OP510).

In S173, the relay station 3-i sets, to the FIR Filter, the delay time of the delayer $D\varphi$ and the weight $w\_(i, N\_(D, i+1))$ received from the control device 1B. Note, the relay station 3-i determines and sets each weight $w\_(i, L)$ ($L = 1, ..., N\_(D, i)$) from the tap T1 to the tap $TN\_(D, i)$ of the FIR filter for suppressing self interference on the basis of the matrix $H\_(SI, i)$.

In S181, the base station 2 transmits the data signal to the terminal station 4. In S182, the relay station 3-i receives the data signal addressed to the terminal station 4 and performs non-regenerative relay. In S183, the relay station 3-i transmits the data signal to the terminal station 4.

From the above, as a device other than the relay station 3-i, the control device 1B can execute determination of whether or not the relay station 3 executes non-regenerative relaying, and calculation of the delay time and the phase rotation amount provided to the relay signal in the relay station 3. Note that the processes illustrated in Fig. 11A, Fig. 11B, Fig. 12A, and Fig. 12B are an example, and the processes are not limited to these. For example, in OP509 and OP510 of Fig. 11B, the control device 1B may calculate the delay time $\varphi i$ provided to the signal by the FIR filter of the relay station 3-i and transmits it to the relay station 3-i, and the relay station 3-i may calculate the delay time of the delayer $D\varphi$ of the FIR filter. Alternatively, in OP509 and OP510 of Fig. 11B, the control device 1B may determine each weight $w\_(i, L)$ ($L = 1, ..., N\_(D, i)$) from the tap T1 to the tap $TN\_(D, i)$ of the FIR filter for suppressing self interference in the relay station 3-i on the basis of the matrix $H\_(SI, i)$ and may notify the relay station 3-i.

Other than the control device 1B, the base station 2 or the terminal station 4 may execute the determination of whether or not the relay station 3 executes non-regenerative relaying, and the calculation of the delay time and the phase rotation amount provided to the relay signal in the relay station 3. The base station 2 or the terminal station 4 may execute, for example, the similar processing to the control device 1B illustrated in Fig. 11A and Fig. 11B. $\tau\_(R)$ used on calculating the delay time $\Delta R$ may be set by the base station 2 or the terminal station 4, or may be predetermined value. Below, it is assumed that $\tau\_(R)$ is set by the base station 2 or the terminal station 4.

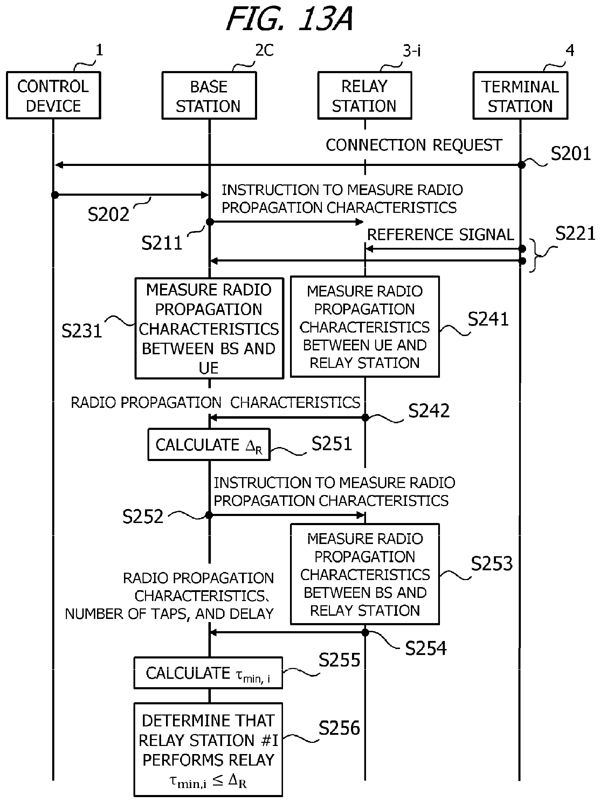

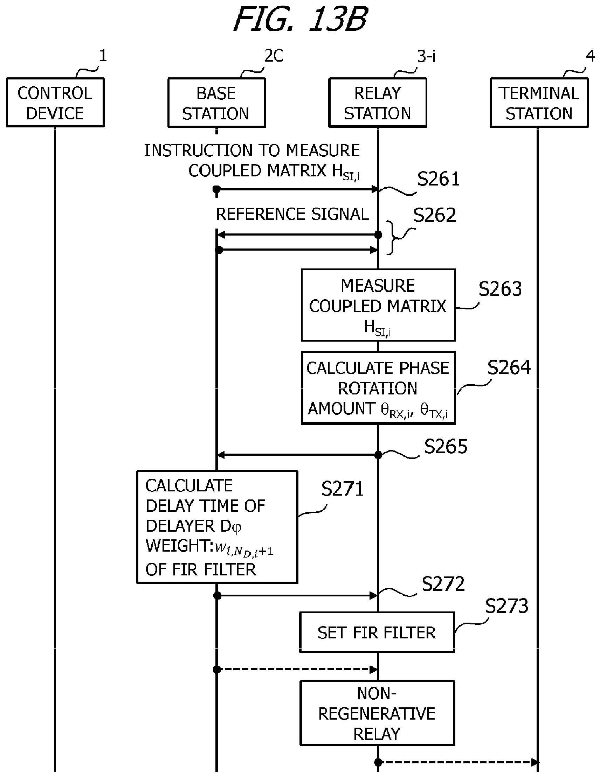

Fig. 13A and Fig. 13B are an example of sequences of processing in case where the base station 2C executes the determination of whether or not the relay station 3 executes non-regenerative relaying, and the calculation of the delay time and the phase rotation amount provided to the relay signal in the relay station 3. Fig. 13A and Fig. 13B are an example assuming the communication system 100A. Fig. 13A and Fig. 13B include processing sequences of the control device 1, the base station 2C, the relay station 3-i and the terminal station 4. Although there are a plurality of relay stations 3, the relay station 3-i is illustrated as a representative for convenience. Also, for each relay station 3, the similar processing to that of the relay station 3-i is performed. Note that in the communication system 100B, the base station 2C is divided into the central base station 2A and the one or more distributed base stations 2B. However, the processing of the control circuit 22A of the central base station 2A is similar to the base station 2C in Fig. 13A and Fig. 13B. Fig. 13A and Fig. 13B indicate transmission and reception of information through the control channel with solid lines and indicate transmission and reception of information through the data channel with dashed lines.

In S201, a connection request is transmitted from the terminal station 4. The connection request is received at the base station 2C that manages a cell in which the terminal station 4 is located and transferred from the base station 2C to the control device 1. In S202, the control device 1 notifies the base station 2C of reception of the connection request from the terminal station 4 and information regarding a plurality of the relay station 3-i relaying signal to the terminal station 4. In this time, the control device 1 may also notify the base station 2C of $\tau\_(R)$ as well.

In S211, the base station 2C transmits, to the relay station 3-i, an instruction to measure radio propagation characteristics to the terminal station 4 (Fig. 7, OP101). The relay station 3-i receives the instruction to measure the radio propagation characteristics.

In S221, the terminal station 4 transmits the reference signal with a predetermined period. In S231, the base station 2C receives the reference signal from the terminal station 4, and measures the radio propagation characteristics between the base station 2C and the terminal station 4 using the reference signal.

In S241, the relay station 3-i receives the reference signal from the terminal station 4 and measures the radio propagation characteristics between the relay station 3-i and the terminal station 4 using the reference signal. In S242, the relay station 3-i transmits the measured radio propagation characteristics between the relay station 3-i and the terminal station 4 to the base station 2C. The base station 2C receives the radio propagation characteristics between the relay station 3-i and the terminal station 4 (Fig. 7, OP103).

In S251, the base station 2C calculates the delay time ΔR using the radio propagation characteristics between the base station 2C and the terminal station 4 and the radio propagation characteristics between the relay station 3-i and the terminal station 4 (Fig. 7, OP104). In S252, the base station 2C transmits, to the relay station 3-i, an instruction to measure the radio propagation characteristics between the base station 2C and the relay station 3-i and a request for information regarding the FIR filter (Fig. 11A, OP501).

In S253, the relay station 3-i measures the radio propagation characteristics between the base station 2C and the relay station 3-i on the basis of the reference signal attached to the signal received from the base station 2C in S252. In S254, the relay station 3-i transmits the radio propagation characteristics between the base station 2C and the relay station 3-i, and the information regarding the FIR filter (the number of taps of the FIR filter ($N\_(D, i)$, a delay time $\tau\_(D)$ per tap) to the base station 2C. The base station 2C receives, from the relay device 3-i, the radio propagation characteristics between the base station 2C and the relay station 3-i and the information regarding the FIR filter (Fig. 11A, OP502).

In S255, the base station 2C calculates the minimum value $\tau\_(min, i)$ of the timing at which the relay signal arrives at the terminal station 4 (Fig. 11A, OP503, OP504). In S256, $\tau\_(min, i)$ is equal to or less than the delay time ΔR, and thus, the base station 2C determines that the relay in the radio frame by the relay station 3-i is executed (Fig. 11A, OP505: Yes).

In S261 in Fig, 13B, the base station 2C transmits, to the relay station 3-i, a request for the coupled matrix $H\_(SI, i)$ in self interference, the phase rotation amount $\theta\_(RX, i)$ of the receiver 312, and the phase rotation amount $\theta\_(TX, i)$ of the transmitter 311 (Fig. 11B, OP507).

In S262, the reference signal is transmitted and received between the relay station 3-i and the base station 2C. In S263, the relay station 3-i measures the coupled matrix $H\_(SI, i)$ on the basis of the reference signal transmitted to and received from the base station 2C in S262. In S264, the relay station 3-i obtains the phase rotation amount $\theta\_(RX, i)$ of the receiver 312 and the phase rotation amount $\theta\_(TX, i)$ of the transmitter 311 with reference to the look-up table held by the control circuit 32. In S265, the relay station 3-i transmits, to the base station 2C, the coupled matrix $H\_(SI, i)$, the phase rotation amount $\theta\_(RX, i)$ of the receiver 312, and the phase rotation amount $\theta\_(TX, i)$ of the transmitter 311, and the base station 2C receives these (Fig. 11B, OP508).

In S271, the base station 2C calculates, for the relay station 3-i, a delay time of the delayer Dφ and the weight $w\_(i, N\_(D, i+1))$ (Fig. 11B, OP509). In S272, the base station 2C notifies the relay station 3-i of the delay time of the delayer Dφ and the weight $w\_(i, N\_(D, i+1))$ (Fig, 11B, OP510).

In S273, the relay station 3-i sets, to the FIR Filter, the delay time of the delayer Dφ and the weight $w\_(i, N\_(D, i+1))$ received from the base station 2C. Note, the relay station 3-i determines and sets each weight $w\_(i, L)$ ($L = 1, ..., N\_(D, i)$) from the tap T1 to the tap $TN\_(D, i)$ of the FIR filter for suppressing self interference on the basis of the matrix $H\_(SI, i)$. After that, the relay station 3-i performs non-regenerative relay of the data signal from the base station 2C in the similar way to S181 to S183 in Fig. 12B.

From Fig. 13A and Fig. 13B, as a device other than the relay station 3-i, the base station 2C can execute determination of whether or not the relay station 3 executes non-regenerative relaying, and calculation of the delay time and the phase rotation amount provided to the relay signal in the relay station 3. Note that the processes illustrated in Fig. 13A, and Fig. 13B are an example, and the processes are not limited to these. For example, in S252 to S253 of Fig. 13A, the base station 2C itself may execute acquisition of the radio propagation characteristics between the base station 2C and the relay station 3-i by the relay station 3-i.

In case where the terminal station 4 executes the determination of whether or not the relay station 3 executes non-regenerative relaying, and the calculation of the delay time and the phase rotation amount provided to the relay signal in the relay station 3, the terminal station 4 may acquire, after transmitting a connection request, from the control device 1, information regarding the base station 2 and the relay station 3, for example. After this, the terminal station 4 may execute the similar processing to the base station 2C after S211 in Fig. 13A. In this case, the terminal station 4 itself may measure the radio propagation characteristics between the terminal station 4 and the base station 2 and the radio propagation characteristics between the terminal station 4 and the relay station 3.

Alternatively, a part or all of the control device 1, the base station 2, and the terminal station 4 cooperate to execute the determination of whether or not the relay station 3 executes non-regenerative relaying, and the calculation of the delay time and the phase rotation amount provided to the relay signal in the relay station 3. For example, the control device 1 may calculate the delay time ΔR, and the base station 2 or the terminal station 4 may execute the determination of whether or not the relay station 3 executes non-regenerative relaying, and the calculation of the delay time and the phase rotation amount provided to the relay signal in the relay station 3. For example, the control device 1 may calculate the delay time ΔR, and the base station 2 may execute the determination of whether or not the relay station 3 executes non-regenerative relaying, and the terminal station 4 may execute the calculation of the delay time and the phase rotation amount provided to the relay signal in the relay station 3.

<Modifications>

While in the first embodiment and the second embodiment, non-regenerative relay in a downlink direction has been described, the same can apply to non-regenerative relay in an uplink direction. In the case of the uplink direction, the transmission station becomes the terminal station 4, and the reception station becomes the base station 2.

A plurality of groups may be created with the plurality of relay stations 3, and the arrival timing ΔR of the relay signals at the terminal station 4 may be set for each group so that the relay signals arrive at the terminal station 4 in the same phase at timings different for each group.

While in the first embodiment and the second embodiment, description has been provided assuming that the relay station 3 includes one antenna, the relay station 3 may include a plurality of antennas. In the case where the relay station 3 includes a plurality of antennas, the relay station 3 determines whether or not non-regenerative relay can be performed for each antenna. Further, in the case where one radio unit is connected to one antenna, the relay station 3 acquires a delay time and a phase rotation amount to be provided to the relay signal for each antenna.

While in the first embodiment, each relay station 3 calculates a delay time and a phase rotation amount to be provided to the relay signal, the control device 1 may calculate these for each relay station 3 and notify each relay station 3. In this case, the control device 1 is notified of the phase rotation amount θ_(RX, i) of the receiver 312, the phase rotation amount θ_(TX, i) of the transmitter 311 and the propagation delay between the relay station 3 and the terminal station 4 from each relay station 3.

<Other Embodiments>

The embodiments described above are examples, and the present disclosure may be changed and carried out as appropriate without departing from the gist of the present disclosure. The processes and means described in the present disclosure may be freely combined to the extent that no technical conflict exists.

A process which is described to be performed by one device may be performed among a plurality of devices. Processes described to be performed by different devices may be performed by one device. Each function to be implemented by a hardware component (server component) in a computer system may be flexibly changed.

The present disclosure may also be implemented by supplying a computer program for implementing a function described in the embodiment above to a computer, and by reading and executing the program by at least one processor of the computer. Such a computer program may be provided to a computer by a non-transitory computer-readable storage medium which is connectable to a system bus of a computer, or may be provided to a computer through a network. The non-transitory computer-readable storage medium may be any type of disk such as a magnetic disk (floppy (registered trademark) disk, a hard disk drive (HDD), etc.), an optical disk (CD-ROM, DVD disk, Blu-ray disk, etc.), a read only memory (ROM), a random access memory (RAM), an EPROM, an EEPROM, a magnetic card, a flash memory, an optical card, and any type of medium which is suitable for storing electronic instructions.

**Claims**

1. A communication system (100A, 100B) comprising:

   a transmission station (2);
   a reception station (4);
   one or more relay stations (3) configured to relay a first signal from the transmission station (2) to the reception station (4) without demodulating or decoding the first signal; and
   a controller (11, 32) configured to acquire, for at least a first relay station (3) among the one or more relay stations (3), a first delay time and a first phase rotation amount to be provided to the first signal in relay by the first relay station (3) on a basis of radio propagation characteristics between the transmission station (2) and the first relay station (3) and radio propagation characteristics between the reception station (4) and the first relay station (3) so that one or more relay signals of the first signal relayed by the one or more relay stations (3) arrive at the reception station (4) at the same time and in the same phase after a first time length from a head of a slot in a radio frame which is synchronous among the transmission station (2), the reception station (4), and the one or more relay stations (3) and in which the first signal is transmitted, and to cause the first relay station (3) to provide the first delay time and the first phase rotation amount to the first signal.

2. The communication system (100A, 100B) according to claim 1,

   wherein each of the one or more relay stations (3) includes a first filter configured to perform filtering to suppress interference between a signal received from the transmission station (2) and the signal to be transmitted to the reception station (4), the interference occurring in each of the one or more relay stations (3), and
   the first filter is configured to

      provide the first delay time to the first signal by the filtering and
      provide the first phase rotation amount to the first signal after the filtering.

3. The communication system (100A, 100B) according to claim 1 or 2, wherein the controller (11, 32) is configured to acquire the first delay time so that the relay signal of the first signal is transmitted from the first relay station (3) after a second time length from the head of the slot, the second time length being obtained by subtracting a propagation delay between the first relay station (3) and the reception station (4) from the first time length.

4. The communication system (100A, 100B) according to claim 1 or 2,

   wherein each of the one or more relay stations (3) includes an antenna, and a transmitter (311) and a receiver (312) to be connected to the antenna, and
   the controller (11, 32) is configured to acquire, as the first phase rotation amount, a value obtained by subtracting a phase rotation amount to be applied at the transmitter (311), a phase rotation amount to be applied on a propagation path from the transmission station (2) to the first relay station (3), and a phase rotation amount to be applied on a propagation path from the first relay station (3) to the reception station (4) from a phase rotation amount to be applied at the receiver (312).

5. The communication system (100A, 100B) according to claim 1, wherein
   the controller (32) is configured to:

      determine whether or not a relay signal of the first signal transmitted from the first relay station (3) is able to arrive at the reception station (4) within a first time length from the head of the slot on a basis of a propagation delay between the first relay station (3) and the reception station (4);
      determine that the relay of the first signal by the first relay station is executed in a case where it is determined that the relay signal of the first signal from the first relay station (3) is able to arrive at the reception station (4) within the first time length from the head of the slot; and
      determine that the relay of the first signal by the first relay station is not executed in a case where it is determined that the relay signal of the first signal from the first relay station (3) is not able to arrive at the reception station (4) within the first time length from the head of the slot.

6. The communication system (100A, 100B) according to claim 1, further comprising

a control device (1) configured to manage a radio line,
wherein the control device (1) is configured to

acquire the first time length on a basis of radio propagation characteristics between the transmission station (2) and the reception station (4) and respective radio propagation characteristics between the one or more relay stations (3) and the reception station (4) and
notify the one or more relay stations (3) of the first time length.

7. A method executed by a computer (1, 3), comprising:

acquiring, for at least a first relay station (3) among one or more relay stations (3) that relay a first signal from a transmission station (2) to a reception station (4) without demodulating or decoding the first signal, a first delay time and a first phase rotation amount to be provided to the first signal in relay by the first relay station (3) on a basis of radio propagation characteristics between the transmission station (2) and the first relay station (3) and radio propagation characteristics between the reception station (4) and the first relay station (3) so that one or more relay signals of the first signal relayed by the one or more relay stations (3) arrive at the reception station (4) at the same time and in the same phase after a first time length from a head of a slot in a radio frame which is synchronous among the transmission station (2), the reception station (4), and the one or more relay stations (3) and in which the first signal is transmitted; and
causing the first relay station (3) to provide the first delay time and the first phase rotation amount to the first signal.

8. A relay station (3) comprising:

a controller (32) configured to

acquire, in non-regenerative relay of relaying a first signal from a transmission station (2) to a reception station (4) without demodulating or decoding the first signal, a first delay time on a basis of radio propagation characteristics between the relay station (3) and the reception station (4) so that a relay signal of a first signal arrives at the reception station (4) after a first time length from a head of a slot in a radio frame which is synchronous among the transmission station (2), the reception station (4), and one or more relay stations (3) and in which the first signal is transmitted, and
acquire a first phase rotation amount that cancels a phase rotation amount to be applied to the first signal by the relay; and

a radio processing unit (31) configured to provide the first delay time and the first phase rotation amount to the first signal in the non-regenerative relay of the first signal.

9. The relay station (3) according to claim 8,

wherein the radio processing unit (31) includes a first filter configured to perform filtering to suppress interference between a signal received from the transmission station (2) and the signal to be transmitted to the reception station (4), the interference occurring in the radio processing unit (31), and
the first filter is configured to

provide the first delay time to the first signal by the filtering and
provide the first phase rotation amount to the first signal after the filtering.

10. The relay station (3) according to claim 8 or 9, wherein the controller (32) is configured to acquire the first delay time so that the relay signal of the first signal is transmitted from the radio processing unit (31) after a second time length from the head of the slot, the second time length being obtained by subtracting a propagation delay between the relay station (3) and the reception station (4) from the first time length.

11. The relay station (3) according to claim 8 or 9,

wherein the radio processing unit (31) includes a transmitter (311) and a receiver (312) to be connected to an antenna, and
the controller (32) is configured to acquire, as the first phase rotation amount, a value obtained by subtracting a phase rotation amount to be applied at the transmitter (311), a phase rotation amount to be applied on a propagation path from the transmission station (2) to the relay station (3), and a phase rotation amount to be applied on a propagation path from the relay station (3) to the reception station (4) from a phase rotation amount to be applied at the receiver (312).

12. The relay station (3) according to claim 8, wherein the controller (32) is configured to

determine whether or not the relay signal of the first signal transmitted from the radio processing unit (31) is able to arrive at the reception station (4) within a first time length from the head of the slot on a basis of a propagation delay between the relay station (3) and the reception station (4),
determine to relay the first signal in a case where it is determined that the relay signal of the first signal is able to arrive at the reception station (4) within the first time length from the head of the slot, and
determine not to relay the first signal in a case where it is determined that the relay signal of the first signal is not able to arrive at the reception station (4) within the first time length from the head of the slot.

13. A control device (1) comprising:
a controller (11) configured to acquire a first time length on a basis of radio propagation characteristics between a transmission station (2) and a reception station (4) and respective radio propagation characteristics between one or more relay stations (3) and the reception station (4), the one or more relay stations (3) being configured to relay a first signal from the transmission station (2) to the reception station (4) without demodulating or decoding the first signal, the one or more relay stations (3) providing a first delay time and a first phase rotation amount to the first signal so that relay signals of the first signal arrive at the reception station (4) at the same time and in the same phase after the first time length from a head of a slot in a radio frame which is synchronous among the transmission station (2), the reception station (4), and the one or more relay stations (3) and in which the first signal is transmitted.

14. The control device (1) according to claim 13, wherein the controller (11) is configured to acquire the first time length by summing a propagation delay between the transmission station (2) and the reception station (4), a delay spread between the transmission station (2) and the reception station (4), and a delay occurring by relay by one relay station (3) among the one or more relay stations (3).

15. The control device (1) according to claim 13 or 14, wherein the controller (11) is configured to

acquire, for at least a first relay station (3) among the one or more relay stations (3), the first delay time and the first phase rotation amount to be provided to the first signal in relay by the first relay station (3) on a basis of radio propagation characteristics between the transmission station (2) and the first relay station (3) and radio propagation characteristics between the reception station (4) and the first relay station (3), and
notify the first relay station (3) of the first delay time and the first phase rotation amount.

## FIG. 1

## FIG. 2

100B

#0

RADIO UNIT ～31

CONTROL CIRCUIT ～32

RELAY STATION

3-N

NON-REGENERATIVE RELAY

NON-REGENERATIVE RELAY

22A

CONTROL CIRCUIT

CENTRAL BASE STATION

2A

#0    #1

RADIO UNIT ～21B

DISTRIBUTED BASE STATION

C1

2B-1

#0

RADIO UNIT ～31

CONTROL CIRCUIT ～32

RELAY STATION

3-1

#0

RADIO UNIT ～41

CONTROL CIRCUIT ～42

TERMINAL STATION

4

CONTROL DEVICE ～1

#0    #1

DISTRIBUTED BASE STATION

2B-K

## FIG. 3

# FIG. 4

# FIG. 5

1

11

| CPU | MAIN MEMORY | 12 |

EXTERNAL
STORAGE DEVICE — 13

OUTPUT DEVICE — 14

OPERATION
DEVICE — 15

COMMUNICATION
DEVICE — 16

# FIG. 6

# FIG. 7

$$\boxed{\text{START}} \qquad \boxed{\begin{array}{c} \text{CONTROL} \\ \text{DEVICE} \end{array}}$$

INSTRUCT BASE STATION AND RELAY STATION TO MEASURE RADIO PROPAGATION CHARACTERISTICS BETWEEN THEM AND TERMINAL STATION — OP101

RECEIVE RADIO PROPAGATION CHARACTERISTICS (PROPAGATION DELAY $\tau_{BS\rightarrow UE}$, DELAY SPREAD $\sigma_{BS\rightarrow UE}$) BETWEEN BASE STATION AND TERMINAL STATION FROM BASE STATION — OP102

RECEIVE RADIO PROPAGATION CHARACTERISTICS (DELAY SPREAD $\sigma_{UE\rightarrow R,i}$, PROPAGATION DELAY $\tau_{UE\rightarrow R,i}$, PHASE ROTATION AMOUNT $\theta_{UE\rightarrow R,i}$) BETWEEN RELAY STATION #i AND TERMINAL STATION FROM EACH RELAY STATION #i — OP103

CALCULATE DELAY TIME $\Delta_R = \tau_{BS\rightarrow UE} + \sigma_{BS\rightarrow UE} + \tau_R$ IN WHICH RELAY DELAY $\tau_R$ IS TAKEN INTO ACCOUNT — OP104

NOTIFY RELAY STATION OF DELAY TIME $\Delta_R$ — OP105

END

# FIG. 8

```
                                    ┌─────────────┐
        ( START )                   │    BASE     │
                                    │   STATION   │
                                    └─────────────┘
            │
            ▼
      ╱─────────────╲
     ╱      IS       ╲  ───── OP201
    ╱  INSTRUCTION TO  ╲
   ╱ MEASURE PROPAGATION ╲        NO
   ╲   CHARACTERISTICS   ╱
    ╲    RECEIVED?      ╱
     ╲─────────────────╱
            │ YES
            ▼
  ┌──────────────────────────┐
  │ RECEIVE REFERENCE SIGNAL │ ──── OP202
  │   FROM TERMINAL STATION  │
  └──────────────────────────┘
            │
            ▼
  ┌──────────────────────────┐
  │  MEASURE RADIO           │ ──── OP203
  │  PROPAGATION             │
  │  CHARACTERISTICS         │
  └──────────────────────────┘
```

START

IS INSTRUCTION TO MEASURE PROPAGATION CHARACTERISTICS RECEIVED? — OP201

NO

YES

RECEIVE REFERENCE SIGNAL FROM TERMINAL STATION — OP202

MEASURE RADIO PROPAGATION CHARACTERISTICS (PROPAGATION DELAY $\tau_{BS \to UE}$, DELAY SPREAD $\sigma_{BS \to UE}$) TO TERMINAL STATION — OP203

NOTIFY CONTROL DEVICE OF RADIO PROPAGATION CHARACTERISTICS TO TERMINAL STATION — OP204

TRANSMIT DATA SIGNAL — OP205

END

*FIG. 9A*

RELAY STATION #i

START

Y

**OP301**
IS INSTRUCTION TO MEASURE PROPAGATION CHARACTERISTICS RECEIVED?

NO → END

YES

**OP302**
MEASURE RADIO PROPAGATION CHARACTERISTICS (DELAY SPREAD $\sigma_{UE \to R, i}$, PROPAGATION DELAY $\tau_{UE \to R, i}$, PHASE ROTATION AMOUNT $\theta_{UE \to R, i}$) FROM REFERENCE SIGNAL OF TERMINAL STATION

**OP303**
NOTIFY CONTROL DEVICE OF RADIO PROPAGATION CHARACTERISTICS BETWEEN TERMINAL STATION AND RELAY STATION #i

**OP304**
IS $\Delta_R$ NOTIFICATION SIGNAL RECEIVED FROM CONTROL DEVICE?

NO

YES

**OP305**
MEASURE RADIO PROPAGATION CHARACTERISTICS (DELAY SPREAD $\sigma_{BS \to R, i}$, PROPAGATION DELAY $\tau_{BS \to R, i}$, PHASE ROTATION AMOUNT $\theta_{BS \to R, i}$) BETWEEN BASE STATION AND RELAY STATION #i

**OP306**
CALCULATE PROCESSING DELAY $\tau_{R,i} = (N_{D,i} - 1) \times \tau_D$ ($N_{D,i}$: THE NUMBER OF TAPS, $\tau_D$: DELAY TIME PER TAP)

**OP307**
CALCULATE MINIMUM VALUE OF RELAY SIGNAL ARRIVAL TIMING
$\tau_{min, i} = \tau_{BS \to R, i} + \sigma_{BS \to R, i} + \tau_{R,i} + \tau_{UE \to R, i}$

**OP308**
$\tau_{min,i} \leq \Delta_R$ ?

NO → END

YES

X

*FIG. 9B*

X

MEASURE COUPLED MATRIX $H_{SI, i}$ IN SELF INTERFERENCE FROM TRANSMISSION AND RECEPTION OF REFERENCE SIGNAL BETWEEN BASE STATION AND RELAY STATION #i — OP309

CALCULATE PHASE ROTATION AMOUNT $\theta_{RX, i}$ OF RECEIVER AND PHASE ROTATION AMOUNT $\theta_{TX, i}$ OF TRANSMITTER — OP310

SET FIR FILTER:

DELAY AMOUNT: $\varphi_i = \Delta_i - \tau_{BS \to R, i} - \sigma_{BS \to R, i}$
WEIGHT: DETERMINE ON THE BASIS OF
$w_{i, L}$ (L = 1, ..., $N_{D,i}$): $H_{SI, I}$
$w_{i, N_{D,i}+1} = e^{-j(\theta_{BS \to R, i} + \theta_{UE \to R, i} + \theta_{TX, i} - \theta_{RX, i})}$

— OP311

NON-REGENERATIVE RELAY OF DATA SIGNAL — OP312

OP313

CONTINUE TO RELAY?

YES → Y

NO

END

## FIG. 10A

## FIG. 10B

```
      1                  2                 3-i                4
┌──────────┐      ┌──────────┐      ┌──────────┐      ┌──────────┐
│ CONTROL  │      │  BASE    │      │  RELAY   │      │ TERMINAL │
│ DEVICE   │      │ STATION  │      │ STATION  │      │ STATION  │
└────┬─────┘      └────┬─────┘      └────┬─────┘      └────┬─────┘
     │                 │  REFERENCE SIGNAL │                │
     │                 │◄────────────────►│   S61          │
     │                 │─────────────────►│                │
     │                 │            ┌─────┴────────┐        │
     │                 │            │ MEASURE      │  S62   │
     │                 │            │ COUPLED      │        │
     │                 │            │ MATRIX       │        │
     │                 │            │ H_{SI,i}     │        │
     │                 │            └─────┬────────┘        │
     │                 │            ┌─────┴────────┐  S63   │
     │                 │            │ CALCULATE    │        │
     │                 │            │ PHASE        │        │
     │                 │            │ ROTATION     │        │
     │                 │            │ AMOUNT       │        │
     │                 │            └─────┬────────┘        │
     │                 │            ┌─────┴────────┐  S64   │
     │                 │            │ SET FIR      │        │
     │                 │            │ FILTER       │        │
     │                 │            └─────┬────────┘        │
     │                 │ - - - - - - - - ►│  S71           │
     │                 │            ┌─────┴────────┐  S72   │
     │                 │            │ NON-         │        │
     │                 │            │ REGENERATIVE │        │
     │                 │            │ RELAY        │        │
     │                 │            └─────┬────────┘        │
     │                 │        S73       │- - - - - - - - ►│
```

- S61 — REFERENCE SIGNAL

- S62 — MEASURE COUPLED MATRIX $H_{SI,i}$

- S63 — CALCULATE PHASE ROTATION AMOUNT $\theta_{RX,i}$, $\theta_{TX,i}$

- S64 — SET FIR FILTER DELAY TIME $\varphi_i$ WEIGHT: $w_{i,L}$ ($L = 1, ..., N_{D,i}$), $w_{i,N_{D,i}+1}$

- S71

- S72 — NON-REGENERATIVE RELAY

- S73

CONTROL
DEVICE

START

*FIG. 11A*

OP101-OP104 IN FIG. 7

OP501

TRANSMIT, TO RELAY STATION #i, INSTRUCTION TO
MEASURE RADIO PROPAGATION CHARACTERISTICS
BETWEEN RELAY STATION #i AN BASE STATION AND
REQUEST FOR INFORMATION REGARDING FIR FILTER

RECEIVE RADIO PROPAGATION CHARACTERISTICS
(PROPAGATION DELAY $\tau_{BS \rightarrow R,i}$, DELAY SPREAD $\sigma_{BS \rightarrow R,i}$, PHASE
ROTATION AMOUNT $\theta_{BS \rightarrow R,i}$) BETWEEN BASE STATION AND
RELAY STATION #i , THE NUMBER OF TAPS $N_{D,i}$, AND DELAY
TIME $\tau_D$ PER TAP FROM EACH RELAY STATION #i

OP502

OP503

CALCULATE PROCESSING DELAY $\tau_{R,i} = (N_{D,i} - 1) \times \tau_D$
($N_{D,i}$: THE NUMBER OF TAPS, $\tau_D$: DELAY PERIOD PER TAP)

CALCULATE MINIMUM VALUE OF RELAY
SIGNAL ARRIVAL TIMING
$\tau_{min,i} = \tau_{BS \rightarrow R,i} + \sigma_{BS \rightarrow R,i} + \tau_{R,i} + \tau_{UE \rightarrow R,i}$

OP504

$\tau_{min,i} \leq \Delta_R$ ?

OP505

YES

Z

NO

OP506

NOTIFY RELAY STATION #i OF NO-EXECIRION
OF NON-REGENERATIVE RELAY

END

## FIG. 11B

```
        ( Z )
          │
          ▼
┌────────────────────────────────┐
│ REQUEST COUPLED MATRIX H_SI, i IN│  OP507
│ SELF INTERFERENCE, PHASE ROTATION│
│ AMOUNT θ_RX, i OF RECEIVER, AND PHASE│
│ ROTATION AMOUNT θ_TX, i OF       │
│ TRANSMITTER OF RELAY STATION #i  │
└────────────────────────────────┘
          │
          ▼
┌────────────────────────────────┐
│ RECEIVE COUPLED MATRIX H_SI, i IN│  OP508
│ SELF INTERFERENCE, PHASE ROTATION│
│ AMOUNT θ_RX, i OF RECEIVER, AND PHASE│
│ ROTATION AMOUNT θ_TX, i OF       │
│ TRANSMITTER FROM RELAY STATION #i│
└────────────────────────────────┘
          │                        OP509
          ▼
┌────────────────────────────────┐
│ CALCULATE SETTING VALUE OF FIR FILTER│
│                                  │
│ DELAY TIME OF DELAYER            │
│ WEIGHT                           │
└────────────────────────────────┘
          │
          ▼
┌────────────────────────────────┐
│ NOTIFY RELAY STATION #i OF DELAY │  OP510
│ TIME OD DELAYER Dφ IN FIR FILTER AND│
│ WEIGHT w_{i,N_{D,i}+1}           │
└────────────────────────────────┘
          │
          ▼
        / ___ /
          │
          ▼
        ( END )
```

CALCULATE SETTING VALUE OF FIR FILTER

DELAY TIME OF DELAYER $D\varphi = \varphi_i - \tau_{R,i}$

$$\varphi_i = \Delta_i - \tau_{BS \to R,i} - \sigma_{BS \to R,i}$$

WEIGHT: $w_{i,N_{D,i}+1} = e^{-j(\theta_{BS \to R,i} + \theta_{UE \to R,i} + \theta_{TX,i} - \theta_{RX,i})}$

NOTIFY RELAY STATION #i OF DELAY TIME OD DELAYER $D\varphi$ IN FIR FILTER AND WEIGHT $w_{i,N_{D,i}+1}$

## FIG. 12A

## FIG. 12B

# FIG. 13A

## FIG. 13B

| 1 | 2C | 3-i | 4 |
|---|---|---|---|
| CONTROL DEVICE | BASE STATION | RELAY STATION | TERMINAL STATION |

INSTRUCTION TO MEASURE
COUPLED MATRIX $H_{SI,i}$ — S261

REFERENCE SIGNAL — S262

MEASURE COUPLED MATRIX $H_{SI,i}$ — S263

CALCULATE PHASE ROTATION AMOUNT $\theta_{RX,i}$, $\theta_{TX,i}$ — S264

S265

CALCULATE DELAY TIME OF DELAYER $D\varphi$ WEIGHT: $w_{i,N_{D,i}+1}$ OF FIR FILTER — S271

S272

SET FIR FILTER — S273

NON-REGENERATIVE RELAY

Europäisches
Patentamt

European
Patent Office

Office européen
des brevets

# EUROPEAN SEARCH REPORT

**Application Number**

**EP 23 19 0613**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/190821 A1 (FUJII HIROMASA [JP] ET AL) 1 September 2005 (2005-09-01) * abstract; figures 3-4 * * paragraphs [0090] - [0105] * | 1-15 | INV. H04B7/155 |
| X | US 2012/020273 A1 (MORI MASARU [JP]) 26 January 2012 (2012-01-26) * paragraphs [0028] - [0031]; figures 4, 11 * | 1-15 | |
| X | RIIHONEN T ET AL: "Design of co-phasing allpass filters for full-duplex OFDM relays", SIGNALS, SYSTEMS AND COMPUTERS, 2008 42ND ASILOMAR CONFERENCE ON, IEEE, PISCATAWAY, NJ, USA, 26 October 2008 (2008-10-26), pages 1030-1034, XP031475444, ISBN: 978-1-4244-2940-0 * paragraphs [000I], [II.A], [III.B]; figure 1 * | 1-15 | |
| | | | TECHNICAL FIELDS SEARCHED (IPC) |
| A | JP 5 547770 B2 (NIPPON TELEGRAPH & TELEPHONE) 16 July 2014 (2014-07-16) * paragraph [0007]; figure 2 * | 1,7,8,13 | H04B |

The present search report has been drawn up for all claims

| Place of search | Date of completion of the search | Examiner |
|---|---|---|
| Munich | 15 January 2024 | Staeger, Rainer |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 19 0613

This annex lists the patent family members relating to the patent documents cited in the above-mentioned European search report.
The members are as contained in the European Patent Office EDP file on
The European Patent Office is in no way liable for these particulars which are merely given for the purpose of information.

15-01-2024

| Patent document cited in search report | | Publication date | Patent family member(s) | | | Publication date |
|---|---|---|---|---|---|---|
| US 2005190821 | A1 | 01-09-2005 | CN | 1658533 | A | 24-08-2005 |
| | | | EP | 1564911 | A1 | 17-08-2005 |
| | | | JP | 4394474 | B2 | 06-01-2010 |
| | | | JP | 2005229524 | A | 25-08-2005 |
| | | | KR | 20060041978 | A | 12-05-2006 |
| | | | US | 2005190821 | A1 | 01-09-2005 |
| US 2012020273 | A1 | 26-01-2012 | JP | 5327320 | B2 | 30-10-2013 |
| | | | JP | WO2010134195 | A1 | 08-11-2012 |
| | | | US | 2012020273 | A1 | 26-01-2012 |
| | | | WO | 2010134195 | A1 | 25-11-2010 |
| JP 5547770 | B2 | 16-07-2014 | JP | 5547770 | B2 | 16-07-2014 |
| | | | JP | 2013214896 | A | 17-10-2013 |

For more details about this annex : see Official Journal of the European Patent Office, No. 12/82

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **H. CHEN. ; A. B. GERSHMAN ; S. SHAH-BAZPANAHI.** Filter-and-Forward Distributed Beamforming in Relay Networks with Frequency Selective Fading. *IEEE Trans. On Signal Processing,* March 2010, vol. 58 (3

- **NOGUCHI, HAYASHI ; KANEKO, SAKAI.** A Single Frequency Full-Duplex Radio Relay Station for Frequency Domain Equalization Systems. *Technical Report of The Institute of Electronics, Information and Communication Engineers,* January 2012, vol. SIP2011-109